(19) Europäisches Patentamt
European Patent Office
Office européen des brevets

(11) EP 4 657 246 A1

(12) EUROPEAN PATENT APPLICATION

(43) Date of publication:
03.12.2025 Bulletin 2025/49

(51) International Patent Classification (IPC):
$G06F\ 9/30^{(2018.01)}$  $G06F\ 17/16^{(2006.01)}$
$G06N\ 20/00^{(2019.01)}$

(21) Application number: 25177390.9

(22) Date of filing: 19.05.2025

(52) Cooperative Patent Classification (CPC):
G06N 20/00; G06F 9/30018; G06F 9/30036;
G06F 17/16; G06N 3/044; G06N 3/045;
G06N 3/063; G06N 3/08; G06N 5/01; G06N 5/022;
G06N 7/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.05.2024 US 202418674908

(71) Applicant: Microsoft Technology Licensing, LLC
Redmond, WA 98052 (US)

(72) Inventors:
• NETER, Omer
  Redmond, 98052 (US)
• DAHER, Rayan
  Redmond, 98052 (US)
• NISSANI, Daniel
  Redmond, 98052 (US)

(74) Representative: CMS Cameron McKenna Nabarro
Olswang LLP
Cannon Place
78 Cannon Street
London EC4N 6AF (GB)

(54) COMPRESSING AND TRANSFORMING VECTOR OPERATIONS IN AN AI MODEL

(57) Techniques are described herein that are capable of compressing and transforming vector operations in an AI model. First output multi-bit elements (MBEs) are generated by combining input single-bit components (SBCs) representing an input token in an AI prompt and first SBCs representing a first layer of the AI model using an exclusive-or operation. The first output MBEs are transformed into first output single-bit elements (SBEs) using a random probability distribution. Second output MBEs are generated by combining intermediate SBEs corresponding to intermediate MBEs derived from the first output SBEs and second SBCs representing a second layer of the AI model using the exclusive-or operation. A response to the AI prompt is generated to include an output token corresponding to a combination of a norm of the intermediate MBEs, a norm of second multi-bit components from which the second SBCs are derived, and a representation of the second output MBEs.

FIG. 1

EP 4 657 246 A1

**Description**

BACKGROUND

Conventional artificial intelligence (AI) models use matrix multiplication to generate a response to an AI prompt. An AI model typically includes multiple layers, and each layer includes a respective matrix. A first layer of the AI model multiplies vectors that represent words in the AI prompt and a first matrix, which is included in the first layer, to provide first output vectors. A second layer of the AI model multiples the first output vectors and a second matrix, which is included in the second layer, to provide second output vectors. A third layer of the AI model multiplies the second output vectors and a third matrix, which is included in the third layer, to provide third output vectors, and so on. The AI model provides a response to the AI prompt based on output vectors that are provided by the last layer of the AI model.

Matrix multiplication often includes a substantial number of computations, which may consume a substantial amount of time and resources. For example, matrix multiplication performed by an AI model may be too computationally intensive to be performed within an acceptable amount of time on a central processing unit. In accordance with this example, the AI model may be executed on a graphical processing unit, which is capable of performing various portions of the matrix multiplication in parallel. However, using a graphical processing unit in lieu of a central processing unit to perform the matrix multiplication increases a cost of executing the AI model.

SUMMARY

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an animal (e.g., a human) is capable of performing. In an example implementation, the artificial general intelligence model is capable of performing a task that surpasses the capabilities of an animal.

It may be desirable for an AI model to generate a response to an AI prompt by performing computations using single-bit representations of multi-bit components of vectors. For instance, multi-bit components of input vectors, which represent tokens (e.g., words) in the AI prompt, and multi-bit components of other vectors, which are included in matrices that represent layers of the AI model, may be converted to single-bit elements (e.g., using a random probability distribution) prior to performing the computations. By using the single-bit elements in lieu of the multi-bit components, complexity of the computations may be reduced (e.g., while retaining a substantial amount of information associated with the multi-bit components). Reducing the complexity of the computations may reduce an amount of time and resources that is consumed by the AI model to generate the response to the AI prompt. For instance, using the single-bit elements in lieu of the multi-bit components may enable the AI model to perform inferencing using exclusive-or operations in lieu of vector multiplications, which may enable the AI model to generate the response more quickly than conventional AI models. The complexity of the computations may be reduced to an extent that enables the computations to be performed on a central processing unit, rather than a graphical processing unit. For example, multiple exclusive-or operations may be performed within a common (e.g., same) cycle of the central processing unit.

Various approaches are described herein for, among other things, compressing and transforming vector operations in an AI model. In a first example approach, first multi-bit components of a first vector, which represents a first layer in an AI model, are converted into first single-bit components. Second multi-bit components of a second vector, which represents a second layer in the AI model, are converted into second single-bit components. Input multi-bit components of an input vector, which represents an input token in an AI prompt, are converted into input single-bit components. First layer output multi-bit elements are generated by combining the input single-bit components and the first single-bit components using an exclusive-or operation. The first layer output multi-bit elements are transformed into first layer output single-bit elements by combining the first layer output multi-bit elements and a random bit sequence that is generated using a random probability distribution. Second layer output multi-bit elements are generated by combining intermediate layer output single-bit elements, which correspond to intermediate layer output multi-bit elements that are derived from the first layer output single-bit elements, and the second single-bit components using the exclusive-or operation. A response to the AI prompt is generated. The response includes an output token that corresponds to a combination of a norm of the intermediate layer output multi-bit elements, a norm of the second multi-bit components, and a representation of the second layer output multi-bit elements.

In a second example approach, first layer output multi-bit elements are generated using a first layer of an AI model by combining input single-bit components, which represent an input token in an AI prompt, and first single-bit components, which represent the first layer of the AI model, using an exclusive-or operation. The first layer output multi-bit elements are transformed into first layer output single-bit elements by combining the first layer output multi-bit elements and first values selected from a random probability distribution. Second layer output multi-bit elements are generated using a second layer of the AI model by combining intermediate layer output single-bit elements, which correspond to intermediate layer output multi-bit elements that are derived from the first layer output single-bit elements, and second single-bit components, which represent the second layer of the AI model, using the exclusive-or operation. A response to the AI prompt is generated. The response includes an output token that corresponds to a combination of a norm of the intermediate layer output multi-bit elements, a norm of second multi-bit components from which the second single-bit components are derived, and a representation of the second layer output multi-bit elements.

In a third example approach, sets of first layer output multi-bit elements are generated using a first layer of an AI model by combining sets of input single-bit components, which represent input tokens in an AI prompt, and sets of first single-bit components, which represent first vectors in a first matrix that defines the first layer of the AI model, using an exclusive-or operation. The sets of the first layer output multi-bit elements are transformed into sets of first layer output single-bit elements by combining the sets of the first layer output multi-bit elements and first values selected from a random probability distribution. Sets of second layer output multi-bit elements are generated using a second layer of the AI model by combining sets of intermediate layer output single-bit elements, which correspond to sets of intermediate layer output multi-bit elements that are derived from the sets of the first layer output single-bit elements, and sets of second single-bit components, which represent sets of second multi-bit components of second vectors in a second matrix that defines the second layer of the AI model, using the exclusive-or operation. A response to the AI prompt is generated. The response includes output tokens that correspond to combinations of norms of the sets of the intermediate layer output multi-bit elements, norms of the sets of the second multi-bit components, and representations of the sets of the second layer output multi-bit elements.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.

FIG. 1 is a block diagram of an example AI-based vector compressing and transforming system in accordance with an embodiment.

FIGS. 2 and 4 depict flowcharts of example methods for compressing and transforming vector operations in an AI model in accordance with embodiments.

FIGS. 3 and 5 are block diagrams of example computing systems in accordance with embodiments.

FIG. 6 is a system diagram of an example mobile device in accordance with an embodiment.

FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

DETAILED DESCRIPTION

I. Example Embodiments

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an animal (e.g., a human) is capable of performing. In an example implementation, the artificial general intelligence model is capable of performing a task that surpasses the capabilities of an animal.

It may be desirable for an AI model to generate a response to an AI prompt by performing computations using single-bit representations of multi-bit components of vectors. For instance, multi-bit components of input vectors, which represent tokens (e.g., words) in the AI prompt, and multi-bit components of other vectors, which are included in matrices that represent layers of the AI model, may be converted to single-bit elements (e.g., using a random probability distribution) prior to performing the computations. By using the single-bit elements in lieu of the multi-bit components, complexity of the computations may be reduced (e.g., while retaining a substantial amount of information associated with the multi-bit components). Reducing the complexity of the computations may reduce an amount of time and resources that is consumed by the AI model to generate the response to the AI prompt. For instance, using the single-bit elements in lieu of the multi-bit components may enable the AI model to perform inferencing using exclusive-or operations in lieu of vector multiplications, which may enable the AI model to generate the response more quickly than conventional AI models. The complexity of the computations may be reduced to an extent that enables the computations to be performed on a central processing unit, rather than a graphical processing unit. For example, multiple exclusive-or operations may be performed within a common (e.g., same) cycle of the central processing unit.

Example embodiments described herein are capable of compressing and transforming vector operations in an AI model. In a first example embodiment, first multi-bit components of a first vector, which represents a first layer in an AI model, are converted into first single-bit components. Second multi-bit components of a second vector, which represents a second layer in the AI model, are converted into second single-bit components. Input multi-bit components of an input vector, which represents an input token in an AI prompt, are converted into input single-bit components. First layer output multi-bit elements are generated by combining the input single-bit components and the first single-bit components using an exclusive-or operation. The first layer output multi-bit elements are transformed into first layer output single-bit elements by combining the first layer output multi-bit elements and a random bit sequence that is generated using a random probability distribution. Second layer output multi-bit elements are generated by combining intermediate layer output single-bit elements, which correspond to intermediate layer output multi-bit elements that are derived from the first layer output single-bit elements, and the second single-bit components using the exclusive-or operation. A response to the AI prompt is generated. The response includes an output token that corresponds to a combination of a norm of the intermediate layer output multi-bit elements, a norm of the second multi-bit components, and a representation of the second layer output multi-bit elements.

In a second example embodiment, first layer output multi-bit elements are generated using a first layer of an AI model by combining input single-bit components, which represent an input token in an AI prompt, and first single-bit components, which represent the first layer of the AI model, using an exclusive-or operation. The first layer output multi-bit elements are transformed into first layer output single-bit elements by combining the first layer output multi-bit elements and first values selected from a random probability distribution. Second layer output multi-bit elements are generated using a second layer of the AI model by combining intermediate layer output single-bit elements, which correspond to intermediate layer output multi-bit elements that are derived from the first layer output single-bit elements, and second single-bit components, which represent the second layer of the AI model, using the exclusive-or operation. A response to the AI prompt is generated. The response includes an output token that corresponds to a combination of a norm of the intermediate layer output multi-bit elements, a norm of second multi-bit components from which the second single-bit components are derived, and a representation of the second layer output multi-bit elements.

In a third example embodiment, sets of first layer output multi-bit elements are generated using a first layer of an AI model by combining sets of input single-bit components, which represent input tokens in an AI prompt, and sets of first single-bit components, which represent first vectors in a first matrix that defines the first layer of the AI model, using an exclusive-or operation. The sets of the first layer output multi-bit elements are transformed into sets of first layer output single-bit elements by combining the sets of the first layer output multi-bit elements and first values selected from a random probability distribution. Sets of second layer output multi-bit elements are generated using a second layer of the AI model by combining sets of intermediate layer output single-bit elements, which correspond to sets of intermediate layer output multi-bit elements that are derived from the sets of the first layer output single-bit elements, and sets of second single-bit components, which represent sets of second multi-bit components of second vectors in a second matrix that defines the second layer of the AI model, using the exclusive-or operation. A response to the AI prompt is generated. The response includes output tokens that correspond to combinations of norms of the sets of the intermediate layer output multi-bit elements, norms of the sets of the second multi-bit components, and representations of the sets of the second layer output multi-bit elements.

Example techniques described herein have a variety of benefits as compared to conventional techniques for performing vector operations in an AI model. For instance, the example techniques are capable of increasing efficiency of the AI model by reducing complexity of the vector operations. The example techniques may reduce the complexity of the vector operations while maintaining accuracy, precision, and reliability of a response that is generated by the AI model. The example techniques may be performed without changing the architecture of the AI model. For instance, the example techniques may change a way that the AI model is represented (e.g., using single-bit components rather than multi-bit components) in lieu of changing the architecture. For example, the AI model may be binarized without changing activation function(s) of the AI model. The example techniques may be capable of preserving properties of vectors that include the multi-bit components when converting the multi-bit components to the single-bit components.

The example techniques may reduce an amount of time and/or resources (e.g., processor cycles, memory, network bandwidth) that is consumed by a computing system to perform vector operations using an AI model. For instance, by converting first multi-bit components of a first vector, which represents a first layer in an AI model, into first single-bit components; converting second multi-bit components of a second vector, which represents a second layer in the AI model, into second single-bit components; converting input multi-bit components of an input vector, which represents an input token in an AI prompt, into input single-bit components; generating first layer output multi-bit elements by combining the input single-bit components and the first single-bit components using an exclusive-or operation; transforming the first layer output multi-bit elements into first layer output single-bit elements by combining the first layer output multi-bit elements and a random bit sequence that is generated using a random probability distribution; generating second layer output multi-bit elements by combining intermediate layer output single-bit elements, which correspond to intermediate layer output multi-bit elements that are derived from the first layer output single-bit elements, and the second single-bit components using the exclusive-or operation; and/or generating a response to the AI prompt to include an output token that corresponds to a combination of a norm of the intermediate layer output multi-bit elements, a norm of the second multi-bit components, and a representation of the second layer output multi-bit elements, the amount of time and resources consumed to generate the response to the AI prompt may be reduced. By reducing the amount of time and resources consumed to generate the response to the AI prompt, the cost of generating the response to the AI prompt may be reduced and/or the efficiency of the computing system may be increased.

By reducing the amount of time and/or resources that is consumed by the computing system to perform vector operations using the AI model, the example techniques may increase a user experience of a user (e.g., an end user) of the AI model. The example techniques may increase an efficiency of the user by reducing the amount of time that the AI model consumes to generate the response to the AI prompt. By compressing and transforming vector operations in an AI model (e.g., by performing any one or more of the operations mentioned above), the example techniques may enable the AI model to be executed on a local machine (e.g., a user device, such as a mobile phone, a personal digital assistant, or a laptop computer). For instance, the AI model may perform its operations on the local machine without using an Internet connection and/or without accessing a server.

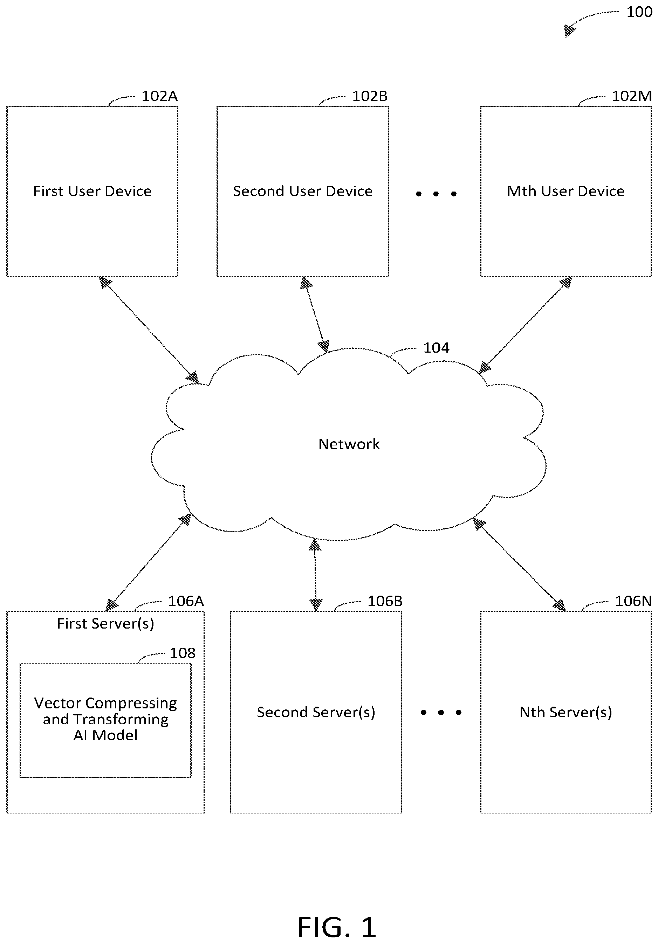

FIG. 1 is a block diagram of an example AI-based vector compressing and transforming system 100 in accordance with an embodiment. Generally speaking, the AI-based vector compressing and transforming system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the AI-based vector compressing and transforming system 100 compresses and transforms vector operations in a vector compressing and transforming AI model 108. Detail regarding techniques compressing and transforming vector operations in an AI model is provided in the following discussion.

As shown in FIG. 1, the AI-based vector compressing and transforming system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the complex expression-based metadata generation system 100.

One example type of computer program that may be executed by one or more of the servers 106A-106N is a developer tool. A developer tool is a computer program that performs diagnostic operations (e.g., identifying source of problem, debugging, profiling, controlling, etc.) with respect to program code. Examples of a developer tool include an integrated development environment (IDE) and a web development platform. Examples of an IDE include Microsoft Visual Studio® IDE, developed and distributed by Microsoft Corporation; AppCode® IDE, PhpStorm® IDE, Rider® IDE, WebStorm® IDE, etc., developed and distributed by JetBrains s.r.o.; JDeveloper® IDE, developed and distributed by Oracle International Corporation; NetBeans® IDE, developed and distributed by Sun Microsystems, Inc.; Eclipse™ IDE, developed and distributed by Eclipse Foundation; and Android Studio™ IDE, developed and distributed by Google LLC and JetBrains s.r.o. Examples of a web development platform include Windows Azure® platform, developed and distributed by Microsoft Corporation; Amazon Web Services® platform, developed and distributed by Amazon.com, Inc.; Google App Engine® platform, developed and distributed by Google LLC; VMWare® platform, developed and distributed by VMWare, Inc.; and Force.com® platform, developed and distributed by Salesforce, Inc. It will be recognized that the example techniques described herein may be implemented using a developer tool.

Another example type of a computer program that may be executed by one or more of the servers 106A-106N is a cloud computing program (a.k.a. cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). For example, IaaS may provide to the user virtualized computing resources that utilize the IaaS provider's physical computer resources.

Examples of a cloud computing program include Google Cloud® program, developed and distributed by Google LLC; Oracle Cloud® program, developed and distributed by Oracle Corporation; Amazon Web Services® program, developed and distributed by Amazon.com, Inc.; Salesforce® program, developed and distributed by Salesforce.com, Inc.; AppSource® and Azure® programs, developed and distributed by Microsoft Corporation; GoDaddy® program, developed and distributed by GoDaddy.com LLC; and Rackspace® program, developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include a vector compressing and transforming AI model 108 for illustrative purposes. The vector compressing and transforming AI model 108 is configured to generate a response to an AI prompt by compressing and transforming vector operations. In a first example implementation, the vector compressing and transforming AI model 108 converts first multi-bit components of a first vector, which represents a first layer in an AI model, into first single-bit components. The vector compressing and transforming AI model 108 converts second multi-bit components of a second vector, which represents a second layer in the AI model, into second single-bit components. The vector compressing and transforming AI model 108 converts input multi-bit components of an input vector, which represents an input token in an AI prompt, into input single-bit components. The vector compressing and transforming AI model 108 generates first layer output multi-bit elements by combining the input single-bit components and the first single-bit components using an exclusive-or operation. The vector compressing and transforming AI model 108 transforms the first layer output multi-bit elements into first layer output single-bit elements by combining the first layer output multi-bit elements and a random bit sequence that is generated using a random probability distribution. The vector compressing and transforming AI model 108 generates second layer output multi-bit elements by combining intermediate layer output single-bit elements, which correspond to intermediate layer output multi-bit elements that are derived from the first layer output single-bit elements, and the second single-bit components using the exclusive-or operation. The vector compressing and transforming AI model 108 generates a response to the AI prompt. The response includes an output token that corresponds to a combination of a norm of the intermediate layer output multi-bit elements, a norm of the second multi-bit components, and a representation of the second layer output multi-bit elements.

In a second example implementation, the vector compressing and transforming AI model 108 generates first layer output multi-bit elements using a first layer of an AI model by combining input single-bit components, which represent an input token in an AI prompt, and first single-bit components, which represent the first layer of the AI model, using an exclusive-or operation. The vector compressing and transforming AI model 108 transforms the first layer output multi-bit elements into first layer output single-bit elements by combining the first layer output multi-bit elements and first values selected from a random probability distribution. The vector compressing and transforming AI model 108 generates second layer output multi-bit elements using a second layer of the AI model by combining intermediate layer output single-bit elements, which correspond to intermediate layer output multi-bit elements that are derived from the first layer output single-bit elements, and second single-bit components, which represent the second layer of the AI model, using the exclusive-or operation. The vector compressing and transforming AI model 108 generates a response to the AI prompt. The response includes an output token that corresponds to a combination of a norm of the intermediate layer output multi-bit elements, a norm of second multi-bit components from which the second single-bit components are derived, and a representation of the second layer output multi-bit elements.

In a third example implementation, the vector compressing and transforming AI model 108 generates sets of first layer output multi-bit elements using a first layer of an AI model by combining sets of input single-bit components, which represent input tokens in an AI prompt, and sets of first single-bit components, which represent first vectors in a first matrix that defines the first layer of the AI model, using an exclusive-or operation. The vector compressing and transforming AI model 108 transforms the sets of the first layer output multi-bit elements into sets of first layer output single-bit elements by combining the sets of the first layer output multi-bit elements and first values selected from a random probability distribution. The vector compressing and transforming AI model 108 generates sets of second layer output multi-bit elements using a second layer of the AI model by combining sets of intermediate layer output single-bit elements, which correspond to sets of intermediate layer output multi-bit elements that are derived from the sets of the first layer output single-bit elements, and sets of second single-bit components, which represent sets of second multi-bit components of second vectors in a second matrix that defines the second layer of the AI model, using the exclusive-or operation. The vector compressing and transforming AI model 108 generates a response to the AI prompt. The response includes output tokens that correspond to combinations of norms of the sets of the intermediate layer output multi-bit elements, norms of the sets of the second multi-bit components, and representations of the sets of the second layer output multi-bit elements.

The vector compressing and transforming AI model 108 may be implemented in various ways to generate a response to an AI prompt by compressing and transforming vector operations, including being implemented in hardware, software, firmware, or any combination thereof. For example, the vector compressing and transforming AI model 108 may be implemented as computer program code configured to be executed in one or more processors. In another example, at least a portion of the vector compressing and transforming AI model 108 may be implemented as hardware logic/electrical circuitry. For instance, at least a portion of the vector compressing and transforming AI model 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the vector compressing and transforming AI model 108 may be (or may be included in) a developer tool and/or a cloud computing program, though the scope of the example embodiments is not limited in this respect.

The vector compressing and transforming AI model 108 is shown to be incorporated in the first server(s) 106A for illustrative purposes and is not intended to be limiting. It will be recognized that the vector compressing and transforming AI model 108 (or any portion(s) thereof) may be incorporated in any one or more of the servers 106A-106N, any one or more of the user devices 102A-102M, or any combination thereof. For example, client-side aspects of the vector compressing and transforming AI model 108 may be incorporated in one or more of the user devices 102A-102M, and server-side aspects of vector compressing and transforming AI model 108 may be incorporated in one or more of the servers 106A-106N.

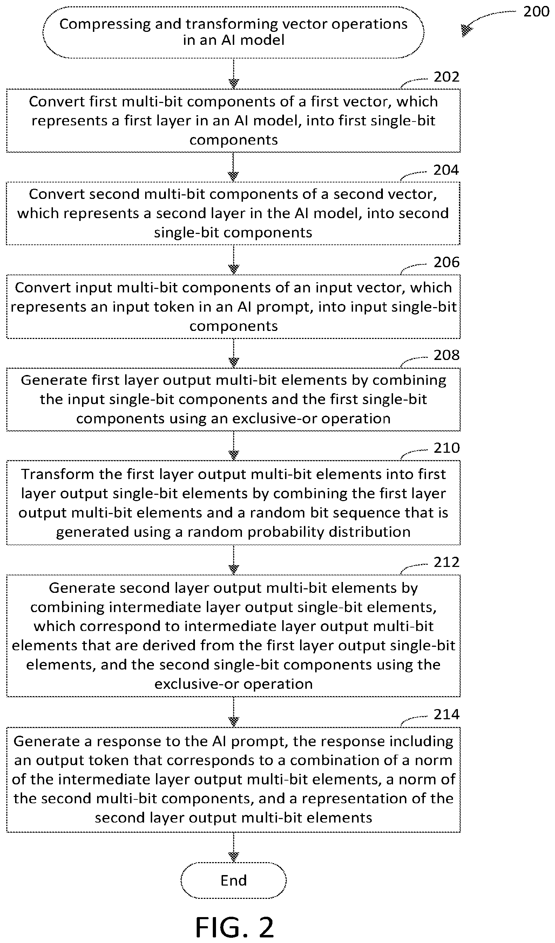

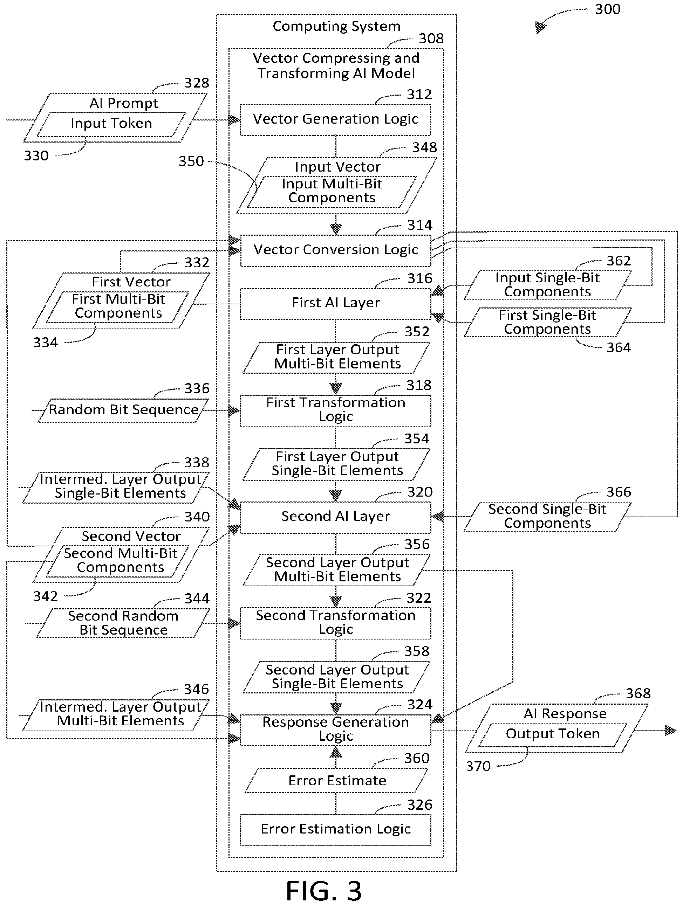

FIG. 2 depicts a flowchart 200 of an example method for compressing and transforming vector operations in an AI model in accordance with an embodiment. Flowchart 200 may be performed by the first server(s) 106A shown in FIG. 1, for example. For illustrative purposes, flowchart 200 is described with respect to a computing system 300 shown in FIG. 3, which is an example implementation of the first server(s) 106A. As shown in FIG. 3, the computing system 300 includes a vector compressing and transforming AI model 308. The vector compressing and transforming AI model 308 includes vector generation logic 312, vector conversion logic 314, a first AI layer 316, first transformation logic 318, a second AI layer 320, second transformation logic 322, response generation logic 324, and error estimation logic 326. Further structural and operational embodiments will be apparent to persons skilled in the relevant art(s) based on the discussion regarding flowchart 200.

As shown in FIG. 2, the method of flowchart 200 begins at step 202. In step 202, first multi-bit components of a first vector, which represents a first layer in an AI model, are converted into first single-bit components. In an example implementation, the vector conversion logic 314 converts first multi-bit components 334 of a first vector 332, which represents a first AI layer 316 in the vector compressing and transforming AI model 308, into first single-bit components 364.

At step 204, second multi-bit components of a second vector, which represents a second layer in the AI model, are converted into second single-bit components. In an example implementation, the vector conversion logic 314 converts second multi-bit components 342 of a second vector 340, which represents a second AI layer 320 in the vector compressing and transforming AI model 308, into second single-bit components 366.

In an example embodiment, the first multi-bit components of the first vector, which represents the first layer in the AI model, and the second multi-bit components of the second vector, which represents the second layer in the AI model, are derived from information on which the AI model is trained.

At step 206, input multi-bit components of an input vector, which represents an input token in an AI prompt, are converted into input single-bit components. In an example embodiment, the input token is a word that is included in a vocabulary (e.g., a fixed vocabulary) of the AI model. In an example implementation, the vector conversion logic 314 converts input multi-bit components 350 of an input vector 348, which represents an input token 330 in an AI prompt 328, into input single-bit components 362. In an aspect of this implementation, the vector generation logic 312 generates the input vector 348 from the AI prompt 328. In accordance with this aspect, the vector generation logic 312 converts the input token 330 into the input multi-bit components 350.

At step 208, first layer output multi-bit elements are generated by combining the input single-bit components and the first single-bit components using an exclusive-or operation. In an aspect, combining the input single-bit components and the first single-bit components using the exclusive-or operation at step 208 increases efficiency of the AI model. For instance, using the exclusive or operation in lieu of vector multiplication may reduce a number of operations that is performed by the AI model and/or reduce an amount of time that the AI model consumes to determine (e.g., calculate) a response to the AI prompt. In an example implementation, the first AI layer 316 generates first layer output multi-bit elements 352 by combining the input single-bit components 362 and the first single-bit components 364 using an exclusive-or operation.

At step 210, the first layer output multi-bit elements are transformed into first layer output single-bit elements (e.g., in constant time) by combining the first layer output multi-bit elements and a random bit sequence that is generated using a random probability distribution. In an aspect, the random bit sequence includes values (e.g., random values) selected from the random probability distribution. The random probability distribution may be implemented as a hash table. In a first example, the random probability distribution is symmetrical about a zero axis. In a second example, the random probability distribution is not symmetrical about the zero axis. In a third example, the random probability distribution is a Gaussian distribution. In a fourth example, the random probability distribution is a Rademacher distribution. In an aspect of the fourth example, a value of +1 has a probability of 50%, and a value of -1 has a probability of 50%. In a fifth example, the random probability distribution is a Bernoulli distribution. In an aspect of the fifth example, a value of +1 has a probability of 50%, and a value of 0 has a probability of 50%. In an example implementation, the first transformation logic 318 transforms the first layer output multi-bit elements 352 into first layer output single-bit elements 354 by combining the first layer output multi-bit elements 352 and a random bit sequence 336 that is generated using the random probability distribution.

At step 212, second layer output multi-bit elements are generated by combining intermediate layer output single-bit elements, which correspond to intermediate layer output multi-bit elements that are derived from the first layer output single-bit elements, and the second single-bit components using the exclusive-or operation. In an aspect, combining the intermediate layer output single-bit elements and the second single-bit components using the exclusive-or operation at step 208 increases efficiency of the AI model. For instance, using the exclusive or operation in lieu of vector multiplication may reduce a number of operations that is performed by the AI model and/or reduce an amount of time that the AI model consumes to determine (e.g., calculate) a response to the AI prompt. In an example implementation, the second AI layer 320 generates second layer output multi-bit elements 356 by combining intermediate layer output single-bit elements 338, which correspond to intermediate layer output multi-bit elements 346 that are derived from the first layer output single-bit elements 354, and the second single-bit components 366 using the exclusive-or operation. In an aspect, the first transformation logic 318 transforming the first layer output multi-bit elements 352 into the first layer output single-bit elements 354 enables the second AI layer 320 to use the exclusive-or operation in lieu of matrix multiplication to generate the second layer output multi-bit elements 356.

The vector compressing and transforming AI model 308 may include any suitable number (e.g., 2, 3, 5, 100, or 4096) of AI layers. In an example embodiment, the second AI layer 320 is a last AI layer in a sequence of AI layers in the vector compressing and transforming AI model 308. In accordance with this embodiment, an intermediate AI layer immediately precedes the second AI layer 320 in the sequence, and intermediate transformation logic is coupled between the intermediate AI layer and the second AI layer 320. In further accordance with this embodiment, the intermediate AI layer generates the intermediate layer output multi-bit elements 346, and the intermediate transformation logic transforms the intermediate layer output multi-bit elements 346 into the intermediate layer output single-bit elements 338 by combining the intermediate layer output multi-bit elements 346 and another random bit sequence that is generated using the random probability distribution. It will be recognized that each successive AI layer in the sequence may generate output multi-bit elements in a similar manner to the first AI layer 316, and each successive transformation logic may transform the output multi-bit elements into output single-bit elements in a similar manner to the first transformation logic 318.

At step 214, a response to the AI prompt is generated. The response includes an output token that corresponds to a combination of a norm of the intermediate layer output multi-bit elements, a norm of the second multi-bit components, and a representation of the second layer output multi-bit elements. A norm of numbers is a square root of a sum of the squares of the numbers. Accordingly, the norm of the intermediate layer output multi-bit elements is a square root of a sum of the squares of the intermediate layer output multi-bit elements. The norm of the second multi-bit components is a square root of a sum of the squares of the second multi-bit components. The representation of the second layer output multi-bit elements may be the second layer output multi-bit elements or second layer output single-bit elements that are based on (e.g., derived from) the second layer output multi-bit elements. In an example implementation, the response generation logic 324 generates an AI response 368 to the AI prompt 328. The response 368 includes an output token 370 that corresponds to a combination of a norm of the intermediate layer output multi-bit elements 346, a norm of the second multi-bit components 342, and a representation of the second layer output multi-bit elements 356. For instance, the representation of the second layer output multi-bit elements 356 may be the second layer output multi-bit elements 356 or second layer output single-bit elements 358, which are discussed in further detail below.

In an example embodiment, generating the response to the AI prompt at step 214 includes selecting the output token from a plurality of tokens (e.g., words) that are included in a vocabulary of the AI model as a result of the output token corresponding to the combination of the norm of the intermediate layer output multi-bit elements, the norm of the second multi-bit components, and the representation of the second layer output multi-bit elements to an extent that is greater than extents to which other tokens that are included in the plurality of tokens correspond to the combination of the norm of the intermediate layer output multi-bit elements, the norm of the second multi-bit components, and the representation of the second layer output multi-bit elements.

In another example embodiment, the first multi-bit components of the first vector represent first floating point numbers that are less than one. In accordance with this embodiment, the second multi-bit components of the second vector represent second floating point numbers that are less than one. In further accordance with this embodiment, the input multi-bit components of the input vector represent input floating point numbers that are less than one.

Each of the first multi-bit components of the first vector, each of the second multi-bit components of the second vector, and each of the input multi-bit components of the input vector may include any suitable number of bit so long as the number is an integer greater than one. In an example embodiment, the first multi-bit components of the first vector, the second multi-bit components of the second vector, and the input multi-bit components of the input vector are 32-bit components. In another example embodiment, the first multi-bit components of the first vector, the second multi-bit components of the second vector, and the input multi-bit components of the input vector are 64-bit components. In yet another example embodiment, the first multi-bit components of the first vector, the second multi-bit components of the second vector, and the input multi-bit components of the input vector are 128-bit components. In still another example embodiment, each of the first multi-bit components of the first vector, each of the second multi-bit components of the second vector, and each of the input multi-bit components of the input vector includes a number of bits that is greater than or equal to a threshold number. For instance, the threshold number may be 32, 64 or 128.

In some example embodiments, one or more steps 202, 204, 206, 208, 210, 212, and/or 214 of flowchart 200 may not be performed. Moreover, steps in addition to or in lieu of steps 202, 204, 206, 208, 210, 212, and/or 214 may be performed. For instance, in an example embodiment, the output token corresponds to a combination of the norm of the intermediate layer output multi-bit elements, the norm of the second multi-bit components, the representation of the second layer output multi-bit elements, and an error estimate. In accordance with this embodiment, the error estimate represents an error introduced by converting the first multi-bit components of the first vector into the first single-bit components, converting the second multi-bit components of the second vector into the second single-bit components, and converting the input multi-bit components of the input vector into the input single-bit components. In an aspect, the first single-bit components estimate (e.g., approximate) the first multi-bit components of the first vector; the second single-bit components estimate the second multi-bit components of the second vector; and the input single-bit components estimate the input multi-bit components of the input vector

In an aspect of this embodiment, the method of flowchart 200 further includes transforming the second layer output multi-bit elements into second layer output single-bit elements by combining the second layer output multi-bit elements and a second random bit sequence that is generated using the random probability distribution. In an aspect, the second random bit sequence includes second values (e.g., second random values) selected from the random probability distribution. In an example implementation, the second transformation logic 322 transforms the second layer output multi-bit elements 356 into second layer output single-bit elements 358 by combining the second layer output multi-bit elements 356 and a second random bit sequence 344 that is generated using the random probability distribution. In a first example of this aspect, generating the response to the AI prompt at step 214 includes generating the output token by multiplying the norm of the intermediate layer output multi-bit elements, the norm of the second multi-bit components, and a cosine of an angle, which takes into consideration the error estimate and a sum of the second layer output single-bit elements. In a second example of this aspect, generating the response to the AI prompt at step 214 includes generating the output token by multiplying the norm of the intermediate layer output multi-bit elements, the norm of the second multi-bit components, and a cosine of an angle, which takes into consideration the error estimate and a population count of the second layer output single-bit elements. The population count of the second layer output single-bit elements indicates a number of set bits (i.e., ones) in the second layer output single-bit elements. It will be recognized that the population count is determined using a popcount instruction, rather than a sum (a.k.a. add) instruction. Taking into consideration the population count, rather than the sum) of the second layer output single-bit elements may increase efficiency and/or speed with which the response to the AI prompt is generated.

In another example embodiment, steps 202, 204, 206, 208, 210, 212, and 214 are performed without changing the architecture of the AI model.

In yet another example embodiment, the vector compressing and transforming AI model 308 (including the first AI layer 316 and the second AI layer 320) is configured to analyze (e.g., develop and/or refine an interpretation of) the AI prompt 328 (e.g., token(s) therein), contextual information that includes context for the AI prompt, relationships between any of the foregoing, and confidences in those relationships. For example, the vector compressing and transforming AI model 308 may compare attributes of the AI prompt 328 and the contextual information (which may include sample AI prompt(s), sample response(s) to the sample AI prompt(s), and/or a vocabulary of the compressing and transforming AI model 308) using artificial intelligence to generate the AI response 368.

In some example embodiments, the vector compressing and transforming AI model 308 includes a neural network that uses the artificial intelligence to determine (e.g., derive) relationships between the AI prompt 328 and the contextual information and confidences in the relationships. The neural network uses those relationships to determine (e.g., derive or select) the output token 370 that is to be included in the AI response 368. For example, attributes of the AI prompt 328 and potentially the contextual information (which may include example AI prompt(s), example response(s) to the example AI prompt(s), and/or the vocabulary of the compressing and transforming AI model 308) may be compared to determine similarities and differences between those attributes. In accordance with this example, the neural network may use those similarities and differences to determine the output token 370 that is to be included in the AI response 368.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the computing system 300 employs a feed forward neural network to train the compressing and transforming AI model 308, which is used to determine AI-based confidences. Such AI-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates a response model (e.g., to determine tokens that are to be included in AI responses) by utilizing information, such as AI prompts (e.g., the AI prompt 328), contextual information, relationships between any of the foregoing, and AI-based confidences that are derived therefrom.

In example embodiments, the AI prompt 328 includes training logic, and the compressing and transforming AI model 308 includes inference logic. The training logic is configured to train an AI algorithm that the inference logic uses to determine (e.g., infer) the AI-based confidences. For instance, the training logic may provide sample AI prompts, sample responses to those sample AI prompts, and/or sample tokens as inputs to the AI algorithm to train the AI algorithm. The sample data may be labeled. The AI algorithm may be configured to derive relationships between the features (e.g., the AI prompt 328 and contextual information) and the resulting AI-based confidences. The inference logic is configured to utilize the AI algorithm, which is trained by the training logic, to determine the AI-based confidence when the features are provided as inputs to the algorithm.

In an example embodiment, the compressing and transforming AI model 308 includes (e.g., is) a generative language model. A generative language model is an AI model that is capable of generating original text output based on sample data. Examples of a generative language model include but are not limited to a generative pre-trained transformer 3 (a.k.a., GPT-3®) model and a generative pre-trained transformer 4 (a.k.a. GPT-4®) model, developed and distributed by OpenAI, Inc.; a large language model Meta AI (a.k.a. LLaMA®) model, developed and distributed by Meta Platforms Inc.; a language model for dialogue applications (a.k.a., LaMDA®) model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. For instance, the generative language model may use a BM25 (a.k.a. Okapi BM25) ranking function to perform its analysis (e.g., based on keywords).

In another example embodiment, the compressing and transforming AI model 308 includes a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semi-supervised learning. Examples of a large language model include but are not limited to the GPT-3® and GPT-4® models, developed and distributed by OpenAI, Inc.; the LLaMA® model, developed and distributed by Meta Platforms Inc.; and a pathways language model (a.k.a., PaLM®) model, developed and distributed by Google LLC.

In yet another example embodiment, the compressing and transforming AI model 308 includes an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of an input token in an AI prompt, a word in a vocabulary of the compressing and transforming AI model 308, or an output token that is a candidate for inclusion in the AI response 368.

In still another example embodiment, the compressing and transforming AI model 308 includes multiple types of AI models. Weights may be applied to the responses generated by the respective types of AI models. For example, the compressing and transforming AI model 308 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The compressing and transforming AI model 308 may combine (e.g., sum) the first weighted response and the second weighted response to generate a response of the compressing and transforming AI model 308.

It will be recognized that the computing system 300 may not include one or more of the vector generation logic 312, the vector conversion logic 314, the first AI layer 316, the first transformation logic 318, the second AI layer 320, the second transformation logic 322, the response generation logic 324, and/or the error estimation logic 326. Furthermore, the computing system 300 may include components in addition to or in lieu of the vector generation logic 312, the vector conversion logic 314, the first AI layer 316, the first transformation logic 318, the second AI layer 320, the second transformation logic 322, the response generation logic 324, and/or the error estimation logic 326.

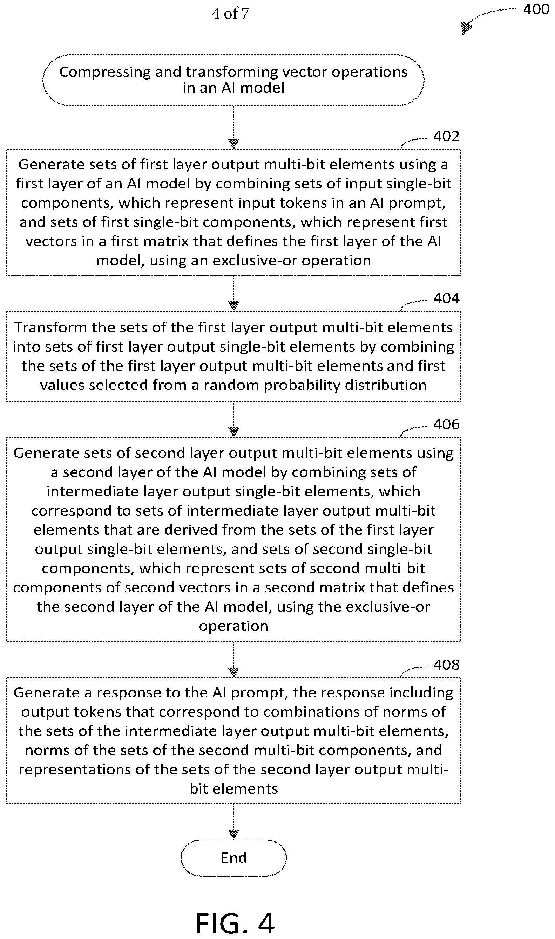

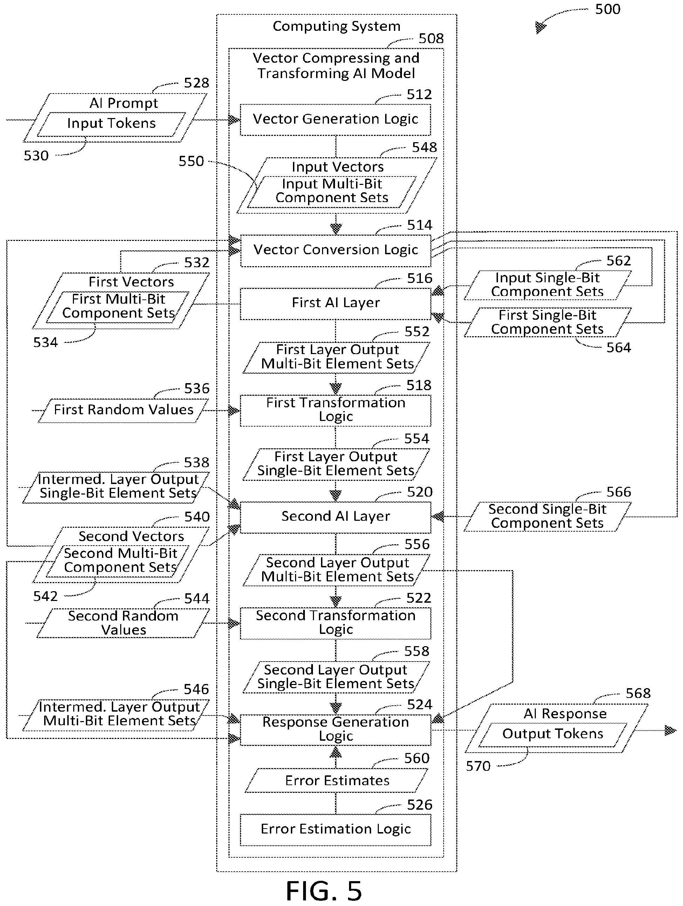

FIG. 4 depicts a flowchart 400 of another example method for compressing and transforming vector operations in an AI model in accordance with an embodiment. Flowchart 400 may be performed by the first server(s) 106A shown in FIG. 1, for example. For illustrative purposes, flowchart 400 is described with respect to a computing system 500 shown in FIG. 5, which is an example implementation of the first server(s) 106A. As shown in FIG. 5, the computing system 500 includes a vector compressing and transforming AI model 508. The vector compressing and transforming AI model 508 includes vector generation logic 512, vector conversion logic 514, a first AI layer 516, first transformation logic 518, a second AI layer 520, second transformation logic 522, response generation logic 524, and error estimation logic 526. Further structural and operational embodiments will be apparent to persons skilled in the relevant art(s) based on the discussion regarding flowchart 400.

As shown in FIG. 4, the method of flowchart 400 begins at step 402. In step 402, sets of first layer output multi-bit elements are generated using a first layer of an AI model by combining sets of input single-bit components, which represent input tokens in an AI prompt, and sets of first single-bit components, which represent first vectors in a first matrix that defines the first layer of the AI model, using an exclusive-or operation. In an example implementation, the first AI layer 516 generates first layer output multi-bit element sets 552, which are sets of first layer output multi-bit elements, by combining input single-bit component sets 562, which represent respective input tokens 530 in an AI prompt 528, and first single-bit component sets 564, which represent respective first vectors 532 in a first matrix that defines the first AI layer 516, using an exclusive-or operation. The first layer output multi-bit element sets 562 are sets of input single-bit components. The first single-bit component sets are sets of first single-bit components. In an aspect, the vector generation logic 512 generates input vectors 548 from the AI prompt 528. In accordance with this aspect, the vector generation logic 512 converts the input tokens 530, which are included in the AI prompt 528, into the respective input vectors 548. The input vectors 548 include respective input multi-bit component sets 550. Each of the input multi-bit component sets 550 includes any suitable number of input multi-bit components. In further accordance with this aspect, the vector conversion logic 514 converts the input multi-bit component sets 550, which are included in the respective input vectors 548, into the respective input single-bit component sets 562. In further accordance with this aspect, the vector conversion logic 514 converts first multi-bit component sets 534, which are included in the first matrix that defines the first AI layer 516, into the respective first single-bit component sets 564.

At step 404, the sets of the first layer output multi-bit elements are transformed into sets of first layer output single-bit elements by combining the sets of the first layer output multi-bit elements and first values selected from a random probability distribution. In an aspect, the random probability distribution is a Gaussian distribution. In another aspect, the random probability distribution is a Rademacher distribution. In yet another aspect, the random probability distribution is a Bernoulli distribution. In an example implementation, the first transformation logic 518 transforms the first layer output multi-bit element sets 552 into first layer output single-bit element sets 554, which are sets of first layer output single-bit elements, by combining the first layer output multi-bit element sets 552 and first random values 536 selected from the random probability distribution.

At step 406, sets of second layer output multi-bit elements are generated using a second layer of the AI model by combining sets of intermediate layer output single-bit elements, which correspond to sets of intermediate layer output multi-bit elements that are derived from the sets of the first layer output single-bit elements, and sets of second single-bit components, which represent sets of second multi-bit components of second vectors in a second matrix that defines the second layer of the AI model, using the exclusive-or operation. In an example implementation, the second AI layer 520 generates second layer output multi-bit element sets 556, which are sets of second layer output multi-bit elements, by combining intermediate layer output single-bit element sets 538, which are sets of intermediate layer output single-bit elements, and second single-bit component sets 566, which are sets of second single-bit components, using the exclusive-or operation. The intermediate layer output single-bit element sets 538 correspond to respective intermediate layer output multi-bit element sets 546, which are sets of intermediate layer output multi-bit elements that are derived from the first layer output single-bit element sets 554. The second single-bit component sets 566 represent respective second multi-bit component sets 542 of respective second vectors 540, which are included in a second matrix that defines the second AI layer 520. In an aspect, the vector conversion logic 514 converts the second multi-bit component sets 542, which are included in the second matrix that defines the second AI layer 520, into the respective second single-bit component sets 566.

At step 408, a response to the AI prompt is generated. The response includes output tokens that correspond to combinations of norms of the sets of the intermediate layer output multi-bit elements, norms of the sets of the second multi-bit components, and representations of the sets of the second layer output multi-bit elements. In an example implementation, the response generation logic 524 generates an AI response 568 to the AI prompt 528. The AI response 568 includes output tokens 570 that correspond to combinations of norms of the intermediate layer output multi-bit element sets 546, norms of the second multi-bit component sets 542, and representations of the second layer output multi-bit element sets 556. In a first aspect, the representations of the second layer output multi-bit element sets 556 are the second layer output multi-bit element sets 556. In a second aspect, the representations of the second layer output multi-bit element sets 556 are the second layer output single-bit element sets 558, which are derived from the respective second layer output multi-bit element sets 556.

In an example embodiment, generating the response to the AI prompt includes selecting the output tokens from a plurality of tokens that are included in a vocabulary of the AI model as a result of the output tokens corresponding to the norms of the sets of the intermediate layer output multi-bit elements, the norms of the sets of the second multi-bit components, and the representations of the combinations of the sets of the second layer output multi-bit elements to extents that are greater than extents to which other tokens that are included in the plurality of tokens correspond to the combinations of the norms of the sets of the intermediate layer output multi-bit elements, the norms of the sets of the second multi-bit components, and the representations of the sets of the second layer output multi-bit elements.

In another example embodiment, generating the sets of the first layer output multi-bit elements by combining the sets of the input single-bit components and the sets of the first single-bit components using the exclusive-or operation at step 402 and generating the sets of the second layer output multi-bit elements by combining the sets of the intermediate layer output single-bit elements and the sets of the second single-bit components using the exclusive-or operation at step 406 increase efficiency of the AI model.

In some example embodiments, one or more steps 402, 404, 406, and/or 408 of flowchart 400 may not be performed. Moreover, steps in addition to or in lieu of steps 402, 404, 406, and/or 408 may be performed. For instance, in an example embodiment, the output tokens correspond to combinations of the norms of the sets of the intermediate layer output multi-bit elements, the norms of the sets of the second multi-bit components, the representations of the sets of the second layer output multi-bit elements, and error estimates. For example, a first output token may correspond to a combination of a norm of a first set of the intermediate layer output multi-bit elements, a norm of a first set of the second multi-bit components, a representation of a first set of the second layer output multi-bit elements, and a first error estimate. In accordance with this example, a second output token may correspond to a combination of a norm of a second set of the intermediate layer output multi-bit elements, a norm of a second set of the second multi-bit components, a representation of a second set of the second layer output multi-bit elements, and a second error estimate, and so on. In accordance with this embodiment, the error estimates represent errors introduced by the sets of the input single-bit components estimating sets of input multi-bit components of input vectors that represent the input tokens, the sets of the first single-bit components estimating sets of first multi-bit components that are included in the first vectors, and the sets of the second single-bit components estimating sets of second multi-bit components that are included in the second vectors. For instance, the errors may be introduced as a result of the sets of input multi-bit components of the input vectors that represent the input tokens being converted to the sets of the input single-bit components, the sets of the first multi-bit components that are included in the first vectors being converted to the sets of the first single-bit components, and the sets of the second multi-bit components that are included in the second vectors being converted to the sets of the second single-bit components.

In an aspect of this embodiment, the method of flowchart 400 further includes transforming the sets of the second layer output multi-bit elements into sets of second layer output single-bit elements by combining the sets of the second layer output multi-bit elements and second values selected from the random probability distribution. In an example implementation, the second transformation logic 522 transforms the second layer output multi-bit element sets 556 into the second layer output single-bit element sets 558 by combining the second layer output multi-bit element sets 556 and second random values 544 selected from the random probability distribution. In an example of this aspect, generating the response to the AI prompt at step 408 includes generating the output tokens by multiplying the norms of the sets of the intermediate layer output multi-bit elements, the norms of the sets of the second multi-bit components, and cosines of angles, which take into consideration the error estimates and population counts of the sets of the second layer output single-bit elements. In another example of this aspect, generating the response to the AI prompt at step 408 includes generating the output tokens by multiplying the norms of the sets of the intermediate layer output multi-bit elements, the norms of the sets of the second multi-bit components, and cosines of angles, which take into consideration the error estimates and sums of the sets of the second layer output single-bit elements.

In another example embodiment, steps 402, 404, 406, and 408 are performed without changing the architecture of the AI model.

In yet another example embodiment, the vector compressing and transforming AI model 508 (including the first AI layer 516 and the second AI layer 520) is configured to analyze (e.g., develop and/or refine an interpretation of) the AI prompt 528 (e.g., tokens therein), contextual information that includes context for the AI prompt, relationships between any of the foregoing, and confidences in those relationships. For example, the vector compressing and transforming AI model 508 may compare attributes of the AI prompt 528 and the contextual information (which may include sample AI prompt(s), sample response(s) to the sample AI prompt(s), and/or a vocabulary of the compressing and transforming AI model 508) using artificial intelligence to generate the AI response 568.

In some example embodiments, the vector compressing and transforming AI model 508 includes a neural network that uses the artificial intelligence to determine (e.g., derive) relationships between the AI prompt 528 and the contextual information and confidences in the relationships. The neural network uses those relationships to determine (e.g., derive or select) the output tokens 570 that are to be included in the AI response 568. For example, attributes of the AI prompt 528 and potentially the contextual information (which may include example AI prompt(s), example response(s) to the example AI prompt(s), and/or the vocabulary of the compressing and transforming AI model 508) may be compared to determine similarities and differences between those attributes. In accordance with this example, the neural network may use those similarities and differences to determine the output tokens 570 that are to be included in the AI response 568.

In example embodiments, the AI prompt 528 includes training logic, and the compressing and transforming AI model 508 includes inference logic. The training logic is configured to train an AI algorithm that the inference logic uses to determine (e.g., infer) the AI-based confidences. The AI algorithm may be configured to derive relationships between the features (e.g., the AI prompt 528 and contextual information) and the resulting AI-based confidences. The inference logic is configured to utilize the AI algorithm, which is trained by the training logic, to determine the AI-based confidence when the features are provided as inputs to the algorithm.

In an example embodiment, the compressing and transforming AI model 508 includes (e.g., is) a generative language model, a large language model (LLM), and/or an embedding model. For instance, the compressing and transforming AI model 508 may include multiple types of AI models. Weights may be applied to the responses generated by the respective types of AI models. For example, a first weight may be applied to a first response generated by a first type of AI model to provide a first weighted response, a second weight that is different from the first weight may be applied to a second response of a second type of AI model to provide a second weighted response, and so on. The compressing and transforming AI model 508 may combine (e.g., sum) the first weighted response, the second weighted response, etc. to generate a response of the compressing and transforming AI model 508.

It will be recognized that the computing system 500 may not include one or more of the vector generation logic 512, the vector conversion logic 514, the first AI layer 516, the first transformation logic 518, the second AI layer 520, the second transformation logic 522, the response generation logic 524, and/or the error estimation logic 526. Furthermore, the computing system 500 may include components in addition to or in lieu of the vector generation logic 512, the vector conversion logic 514, the first AI layer 516, the first transformation logic 518, the second AI layer 520, the second transformation logic 522, the response generation logic 524, and/or the error estimation logic 526.

Further details regarding an example implementation will now be discussed. This implementation relies on a modified Gaussian matrix multiplication technique in conjunction with a sign function (a.k.a. signum function) applied to the resultant vector. Approximate matrix multiplication AMM) may be addressed using 1-bit quantization on unit vectors, which may be extended to include all real vectors. A binary based approximation algorithm for matrix multiplication using relatively few bits (e.g., as few bits as possible) may be based on Grothedniack's identity, which is reflected in the following equation:

$$\mathrm{E}[sign(g \cdot u) \cdot sign(g \cdot v)] = \frac{2}{\pi} \cdot arcsine(u \cdot v)$$

(Equation 1)

where u, v, and g represent respective vectors. In an aspect, vector u represents a token in an AI prompt. In accordance with this aspect, vector v represents a layer of an AI model. For instance, vector v may be included in a matrix that defines the layer of the AI model. In further accordance with this aspect, vector g includes random values selected from a random probability distribution (e.g., a stable random probability distribution). The function $sign(g \cdot u)$ indicates a sign of a multiplication of vector g and vector u. The function $sign(g \cdot v)$ indicates a sign of a multiplication of vector g and vector v.

By letting S(u) be the sign vector associated with vector u and letting S(v) be the sign vector associated with vector v, the average expression may be represented as follows:

$$\mathrm{E}[sign(g \cdot u) \cdot sign(g \cdot v)] \approx \frac{1}{k} \cdot \sum_{i=1}^{k} sign(g_i \cdot u) \cdot sign(g_i \cdot v)$$

(Equation 2)

Equation 2 properly captures the connection between the sign function and the vector inner product. The expectation part of the equation may be modified using the laws of large numbers. For instance, by using the laws of large numbers, an approximation using k average samples may be represented as follows:

$$\frac{1}{k} \cdot \begin{bmatrix} sign(g_1 \cdot u) & \cdots & sign(g_k \cdot u) \end{bmatrix} \times \begin{bmatrix} sign(g_1 \cdot v) \\ \vdots \\ sign(g_k \cdot v) \end{bmatrix} = \frac{S_k(u) \cdot S_k(v)}{k} \quad \text{(Equation 3)}$$

The sine function is continuous. Accordingly, based on the laws of large numbers, a limit may be taken as follows:

$$\lim_{k \to \infty} sin(\frac{\pi}{2k} \cdot S_k(u) \cdot S_k(v)) = sin(\frac{\pi}{2} \cdot \mathbf{E}[sign(g \cdot u) \cdot sign(g \cdot v)]) \quad \text{(Equation 4)}$$

For instance, Equation 4 may be achieved by replacing the left side of Equation 1 with the right side of Equation 3, solving for arcsine, and taking the sine of both sides. By setting k equal to infinity on the left side of Equation 4, we obtain the right side of Equation 4.

The approximation may be used to determine the inner product as follows:

$$u \cdot v \approx sin(\frac{\pi}{2} \cdot \frac{S_k(u) \cdot S_k(v)}{k}) \quad \text{(Equation 5)}$$

In an effort to identify an algorithm for a compact and fast alternative for conventional vector operations, an error associated with Equation 5 may be taken into consideration using the following equation:

$$u \cdot v = sin(\frac{\pi}{2}(\frac{S_k(u) \cdot S_k(v)}{k} \pm \epsilon)) \quad \text{(Equation 6)}$$

It will be recognized that the epsilon in Equation 6 represents the error associated with transforming average to expectation and vice versa.

Before an error approximation is performed, a relationship between variance and expectation may be represented as follows:

$$\sigma^2 = \mathrm{E}[(sign(g \cdot u) \cdot sign(g \cdot v))^2] - \mathrm{E}[(sign(g \cdot u) \cdot sign(g \cdot v))]^2 = 1 - \mu^2 \quad \text{(Equation 7)}$$

Equation 7 may be rearranged as follows:

$$\sigma^2 + \mu^2 = 1 \quad \text{(Equation 8)}$$

The Chebyshev inequality may be used as follows:

$$(|\overline{X_k} - \mu| \leq \epsilon) \geq 1 - \frac{\sigma^2}{k \cdot \epsilon^2} = 1 - \frac{1 - \mu^2}{k \cdot \epsilon^2} \geq 1 - \frac{1}{k \cdot \epsilon^2} \quad \text{(Equation 9)}$$

Hence, with probability at least p, the binary approximation with length k will produce an error that is represented as follows:

$$Error = \frac{1}{\sqrt{k \cdot (1 - p)}} \quad \text{(Equation 10)}$$

It will be recognized that if k is relatively large, the error is relatively small.

From Equation 6, the multiplication $S_k(u) \cdot S_k(v)$ may be examined to determine an alternative in the form of a bit-wise operation. When the signs of components in $S_k(u)$ and $S_k(v)$ are different, multiplication of the components produces -1. When the signs are the same, the multiplication produces +1. The value -1 may be transformed to zero. The transformation may be defined as $* : -1 \to 0$. Accordingly, the transformed versions of $S_k(u)$ and $S_k(v)$ may be represented with an asterisk, *, superscript, as shown in the following derivation, which converts from matrix multiplication to bit-wise operations using an exclusive-or operation (i.e., Xor):

$$S_k(u) \cdot S_k(v) =$$

$$Xor(S_{k^*}(u), S_{k^*}(v))(-1 \cdot count(\text{"1"}) + count(\text{"0"})) =$$

$$Xor(S_{k^*}(u), S_{k^*}(v))(-count(\text{"1"}) + k - count(\text{"1"})) =$$

$$Xor(S_{k^*}(u), S_{k^*}(v))(k - 2 \cdot count(\text{"1"}))$$

which results in the following formula:

$$sin(\frac{\pi}{2}(\frac{S_k(u) \cdot S_k(v)}{k} \pm \epsilon)) = sin(\frac{\pi}{2}(Xor(S_k^*(u), S_k^*(v))(k - 2 \cdot count(\text{"1"})) \pm \epsilon))$$

$$(Equation\ 11)$$

It will be recognized that by performing the transformation mentioned above, the transformed versions of $S_k(u)$ and $S_k(v)$ produce results of either 0 or 1.

Equation 11 may be simplified as follows:

$$sin(\frac{\pi}{2k}(k - 2 \cdot Xor(S_k^*(u), S_k^*(v)).count(\text{"1"})) \pm \epsilon)) =$$

$$sin((\frac{\pi}{2} - \frac{\pi}{k} \cdot Xor(S_k^*(u), S_k^*(v)).count(\text{"1"})) \pm \frac{\pi}{2k} \cdot \epsilon)) =$$

$$cos(\frac{\pi}{k} \cdot Xor(S_k^*(u), S_k^*(v)).count(\text{"1"}) \pm \frac{\pi}{2k} \cdot \epsilon))$$

$$(Equation\ 12)$$

Equation 12 shows that the effect of the error is reduced by performing the transformation mentioned above (i.e., transforming the value -1 to zero) because the error is divided by k.

Based on the simplification of Equation 11, the binary formula for unit vectors may be represented as follows:

$$u \cdot v = cos(\frac{\pi}{k} \cdot Xor(S_k^*(u), S_k^*(v)).count(\text{"1"}) \pm \frac{\pi}{2k} \cdot \epsilon))$$

$$(Equation\ 13)$$

It should be noted that the Xor operation is affected by the sign function, which is not affected by the norms of the vectors u and v.

For all $u,v \in R^n$, the norms of the vectors u and v may be used to provide a generalized approximation as follows:

$$u \cdot v = ||u|| \cdot ||v|| \cdot cos(\frac{\pi}{k} \cdot Xor(S_k^*(u), S_k^*(v)).count(\text{"1"}) \pm \varepsilon_k(p)))$$

$$(Equation\ 14)$$

where

$$\varepsilon_{chebyshev} = \frac{\pi}{\sqrt{4 \cdot k^3 \cdot (1 - p)}}$$

$$(Equation\ 15)$$

and

$$\varepsilon_{\text{hoeffding}} = \sqrt{\frac{\pi^2}{2 \cdot k^3} \cdot log(\frac{2}{1-p})} \qquad \text{(Equation 16)}$$

In Equations 14 and 15, as k increases, the error decreases by $O(k^{-1.5})$.

The error estimations above are theoretical. For a generated dataset with different distribution vectors, the real error may be represented as follows:

$$RealError(k) = |\frac{S_k(u) \cdot S_k(v)}{k} - \frac{2}{\pi} \cdot arcsin(u \cdot v)| \qquad \text{(Equation 17)}$$

and a function may be fit for different values of k.

It should be noted that Xor.count may be calculated in O(log(k)) complexity, and even in O(1) for 32 bit numbers, which is an improvement for large sequences. The other computations are constant. An example algorithm the counts the number of "on" bits in a sequence for 32 bit number in constant time is as follows:

```
int BitCount(unsigned int u)
{ unsigned int uCount;
    uCount = u - ((u >> 1) & 033333333333) - ((u >> 2) & 011111111111); return
    ((uCount + (uCount >> 3)) & 030707070707) % 63;
}
```

If weighted matrices that define respective layers of the AI model are binarized using a random probability distribution to provide a binarized representation of the AI model, each layer of the AI model is represented by a binary matrix. Thus, when querying each layer in the binarized model, the result is not a binary vector. Rather, the result is an approximation of the result that may have resulted from the AI model before the binarization process. Thus, after each layer of the AI model, the resultant vector is binarized before the vector is provided as input to the next layer.

In an aspect, a sparce random projection matrix with randomized {1, 0, -1} values is used (e.g., in lieu of a Gaussian matrix transform) to transform the resultant vector of each layer of the AI model to a binarized representation, and the binarized representation is provided as an input to the next layer of the AI model.

Each vector u may be transformed to a k-sized binary vector $S_k^*(u)$. The k-sized binary vector may retain at least some of the information regarding its relative angle in the vector space. Using a random probability distribution with continuous data and transforming it to discreet data may cause large errors:

$$u \cdot v = ||u|| \cdot ||v|| \cdot cos(\frac{\pi}{k} \cdot Xor(S_k^*(u), S_k^*(v)).count("1"))) \qquad \text{(Equation 18)}$$

where

$$\theta_{uv} \approx \frac{\pi}{k} \cdot Xor(S_k^*(u), S_k^*(v)).count("1")) \qquad \text{(Equation 19)}$$

Note that $\theta_{uv}$ is the angle between vector u and vector v.

The error may be corrected to enable a result (e.g., prediction) having greater accuracy and/or precision. The following equation shows a relationship between real and approximated calculations in which the variable epsilon, $\varepsilon$, is introduced to reflect the error:

$$u \cdot v = ||u|| \cdot ||v|| \cdot cos(\theta_{uv}^{real}) = ||u|| \cdot ||v|| \cdot cos(\theta_{uv}^{approx} + \epsilon) =$$

$$||u|| \cdot ||v|| \cdot cos(\epsilon) \cdot cos(\theta_{uv}^{approx}) - ||u|| \cdot ||v|| \cdot sin(\epsilon) \cdot sin(\theta_{uv}^{approx})$$

(Equation 20)

By solving the following equation, the error vector, which is governed by ε, may be determined:

$$\left[ ||u|| \cdot ||v|| \cdot cos(\theta_{uv}^{approx}) \quad -||u|| \cdot ||v|| \cdot sin(\theta_{uv}^{approx}) \right] \times \begin{bmatrix} cos(\epsilon) \\ \\ sin(\epsilon) \end{bmatrix}$$

(Equation 21)

The error vector may be determined using any suitable numerical method, such as the least square method.

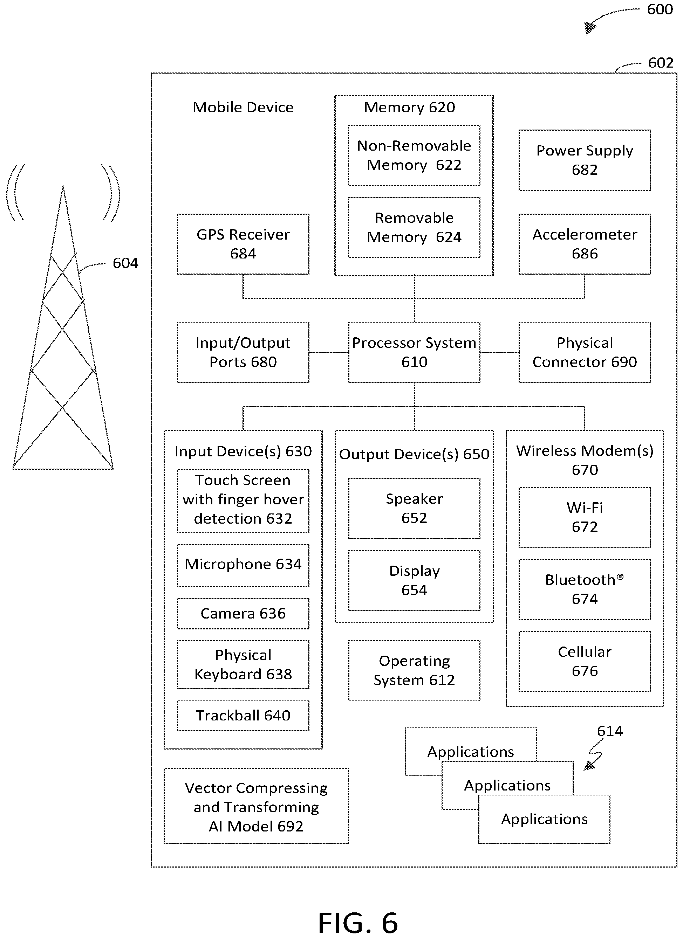

FIG. 6 is a system diagram of an example mobile device 600 including a variety of optional hardware and software components, shown generally as 602. Any components 602 in the mobile device may communicate with any other component, though not all connections are shown, for ease of illustration. The mobile device 600 may be any of a variety of computing devices (e.g., cell phone, smartphone, handheld computer, Personal Digital Assistant (PDA), etc.) and may allow wireless two-way communications with one or more mobile communications networks 604, such as a cellular or satellite network, or with a local area or wide area network.

The mobile device 600 includes a processor system 610 (e.g., signal processor, microprocessor, ASIC, or other control and processing logic circuitry) for performing such tasks as signal coding, data processing, input/output processing, power control, and/or other functions. An operating system 612 may control the allocation and usage of the components 602 and support for one or more applications 614 (a.k.a. application programs). The applications 614 may include common mobile computing applications (e.g., email applications, calendars, contact managers, web browsers, messaging applications) and any other computing applications (e.g., word processing applications, mapping applications, media player applications).

The mobile device 600 includes a vector compressing and transforming AI model 692, which is operable in a manner similar to the vector compressing and transforming AI model 108 described above with reference to FIG. 1, the vector compressing and transforming AI model 308 described above with reference to FIG. 3, and/or the vector compressing and transforming AI model 508 described above with reference to FIG. 5.

The mobile device 600 includes memory 620. The memory 620 may include non-removable memory 622 and/or removable memory 624. The non-removable memory 622 may include random access memory (RAM), read-only memory (ROM), flash memory, a hard disk, or other well-known memory storage technologies. The removable memory 624 may include flash memory or a Subscriber Identity Module (SIM) card, which is well known in Global System for Mobile Communications (GSM) systems, or other well-known memory storage technologies, such as "smart cards." The memory 620 may store data and/or code for running the operating system 612 and the applications 614. Example data may include web pages, text, images, sound files, video data, or other data sets to be sent to and/or received from one or more network servers or other devices via one or more wired or wireless networks. Memory 620 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 600 may support one or more input devices 630, such as a touch screen 632, microphone 634, camera 636, physical keyboard 638 and/or trackball 640 and one or more output devices 650, such as a speaker 652 and a display 654. Touch screens, such as the touch screen 632, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 632 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 632 and display 654 may be combined in a single input/output device. The input devices 630 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (e.g., electroencephalography (EEG) and related methods). Thus, in one specific example, the operating system 612 or applications 614 may include speech-recognition software as part of a voice control interface that allows a user to operate the mobile device 600 via voice commands. Furthermore, the mobile device 600 may include input devices and software that allows for user interaction via a user's spatial gestures, such as detecting and interpreting gestures to provide input to a gaming application.

Wireless modem(s) 670 may be coupled to antenna(s) (not shown) and may support two-way communications between the processor system 610 and external devices, as is well understood in the art. The modem(s) 670 are shown generically and may include a cellular modem 676 for communicating with the mobile communication network 604 and/or other radio-based modems (e.g., Bluetooth® 674 and/or Wi-Fi 672). At least one of the wireless modem(s) 670 is typically configured for communication with one or more cellular networks, such as a GSM network for data and voice communications within a single cellular network, between cellular networks, or between the mobile device and a public switched telephone network (PSTN).

The mobile device 600 may further include at least one input/output port 680, a power supply 682, a satellite navigation system receiver 684, such as a Global Positioning System (GPS) receiver, an accelerometer 686, and/or a physical connector 690, which may be a universal serial bus (USB) port, IEEE 1394 (FireWire) port, and/or RS-232 port. The illustrated components 602 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the vector compressing and transforming AI model 108, the vector compressing and transforming AI model 308, the vector generation logic 312, the vector conversion logic 314, the first AI layer 316, the first transformation logic 318, the second AI layer 320, the second transformation logic 322, the response generation logic 324, the error estimation logic 326, the vector compressing and transforming AI model 508, the vector generation logic 512, the vector conversion logic 514, the first AI layer 516, the first transformation logic 518, the second AI layer 520, the second transformation logic 522, the response generation logic 524, the error estimation logic 526, flowchart 200, and/or flowchart 400 may be implemented in hardware, software, firmware, or any combination thereof.

For example, any one or more of the vector compressing and transforming AI model 108, the vector compressing and transforming AI model 308, the vector generation logic 312, the vector conversion logic 314, the first AI layer 316, the first transformation logic 318, the second AI layer 320, the second transformation logic 322, the response generation logic 324, the error estimation logic 326, the vector compressing and transforming AI model 508, the vector generation logic 512, the vector conversion logic 514, the first AI layer 516, the first transformation logic 518, the second AI layer 520, the second transformation logic 522, the response generation logic 524, the error estimation logic 526, flowchart 200, and/or flowchart 400 may be implemented, at least in part, as computer program code configured to be executed in one or more processors.

In another example, any one or more of the vector compressing and transforming AI model 108, the vector compressing and transforming AI model 308, the vector generation logic 312, the vector conversion logic 314, the first AI layer 316, the first transformation logic 318, the second AI layer 320, the second transformation logic 322, the response generation logic 324, the error estimation logic 326, the vector compressing and transforming AI model 508, the vector generation logic 512, the vector conversion logic 514, the first AI layer 516, the first transformation logic 518, the second AI layer 520, the second transformation logic 522, the response generation logic 524, the error estimation logic 526, flowchart 200, and/or flowchart 400 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

II. Further Discussion of Some Example Embodiments

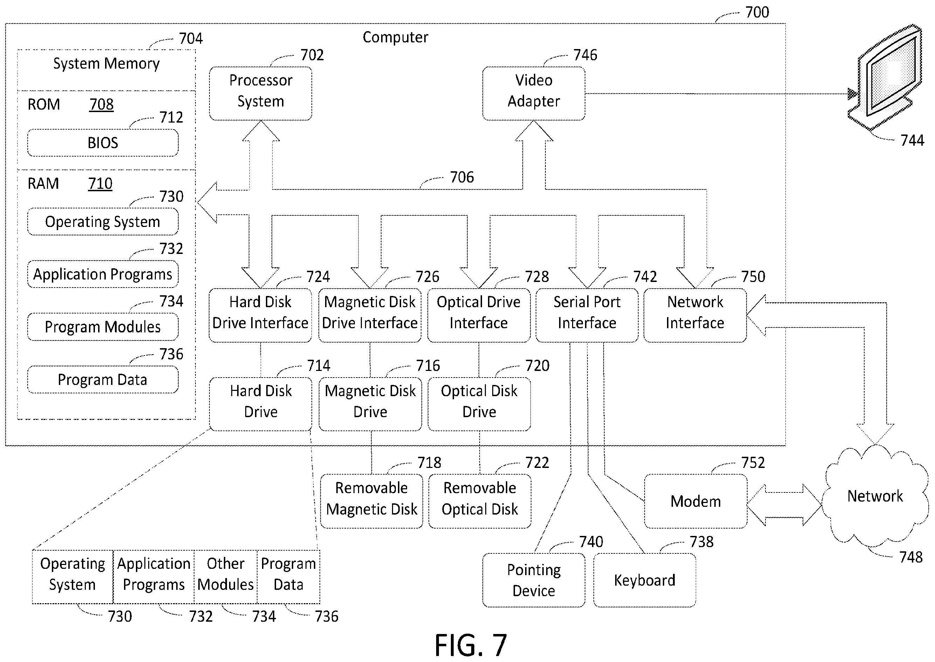

(A1) A first example system (Figure 1, 102A-102M, 106A-106N; Figure 3, 300; Figure 6, 602; Figure 7, 700) comprises a processor system (Figure 6, 610; Figure 7, 702) and a memory (Figure 6, 620, 622, 624; Figure 7, 704, 708, 710) that stores computer-executable instructions. The computer-executable instructions are executable by the processor system to at least convert (Figure 2, 202) first multi-bit components (Figure 3, 334) of a first vector (Figure 3, 332) into first single-bit components (Figure 3, 364). The first vector represents a first layer (Figure 3, 316) in an artificial intelligence (AI) model (Figure 3, 308). The computer-executable instructions are executable by the processor system further to at least convert (Figure 2, 204) second multi-bit components (Figure 3, 342) of a second vector (Figure 3, 340) into second single-bit components (Figure 3, 366). The second vector represents a second layer (Figure 3, 320) in the AI model. The computer-executable instructions are executable by the processor system further to at least convert (Figure 2, 206) input multi-bit components (Figure 3, 350) of an input vector (Figure 3, 348) into input single-bit components (Figure 3, 362). The input vector represents an input token (Figure 3, 330) in an AI prompt (Figure 3, 328). The computer-executable instructions are executable by the processor system further to at least generate (Figure 2, 208) first layer output multi-bit elements (Figure 3, 352) by combining the input single-bit components and the first single-bit components using an exclusive-or operation. The computer-executable instructions are executable by the processor system further to at least transform (Figure 2, 210) the first layer output multi-bit elements into first layer output single-bit elements (Figure 3, 354) by combining the first layer output multi-bit elements and a random bit sequence (Figure 3, 336) that is generated using a random probability distribution. The computer-executable instructions are executable by the processor system further to at least generate (Figure 2, 212) second layer output multi-bit elements (Figure 3, 356) by combining intermediate layer output single-bit elements (Figure 3, 338), which correspond to intermediate layer output multi-bit elements (Figure 3, 346) that are derived from the first layer output single-bit elements, and the second single-bit components using the exclusive-or operation. The computer-executable instructions are executable by the processor system further to at least generate (Figure 2, 214) a response (Figure 3, 368) to the AI prompt. The response comprises an output token (Figure 3, 370) that corresponds to a combination of a norm of the intermediate layer output multi-bit elements, a norm of the second multi-bit components, and a representation of the second layer output multi-bit elements.

(A2) In the example system of A1, wherein the computer-executable instructions are executable by the processor system to at least: increase efficiency of the AI model by combining the input single-bit components and the first single-bit components using the exclusive-or operation to generate the first layer output multi-bit elements and combining the intermediate layer output single-bit elements and the second single-bit components using the exclusive-or operation to generate the second layer output multi-bit elements.

(A3) In the example system of any of A1-A2, wherein the output token corresponds to a combination of the norm of the intermediate layer output multi-bit elements, the norm of the second multi-bit components, the representation of the second layer output multi-bit elements, and an error estimate; and wherein the error estimate represents an error introduced by converting the first multi-bit components of the first vector into the first single-bit components, converting the second multi-bit components of the second vector into the second single-bit components, and converting the input multi-bit components of the input vector into the input single-bit components.

(A4) In the example system of any of A1-A3, wherein the computer-executable instructions are executable by the processor system further to at least: transform the second layer output multi-bit elements into second layer output single-bit elements by combining the second layer output multi-bit elements and a second random bit sequence that is generated using the random probability distribution; and generate the output token by multiplying the norm of the intermediate layer output multi-bit elements, the norm of the second multi-bit components, and a cosine of an angle, which takes into consideration the error estimate and a population count of the second layer output single-bit elements.

(A5) In the example system of any of A1-A4, wherein the computer-executable instructions are executable by the processor system further to at least: transform the second layer output multi-bit elements into second layer output single-bit elements by combining the second layer output multi-bit elements and a second random bit sequence that is generated using the random probability distribution; and generate the output token by multiplying the norm of the intermediate layer output multi-bit elements, the norm of the second multi-bit components, and a cosine of an angle, which takes into consideration the error estimate and a sum of the second layer output single-bit elements.

(A6) In the example system of any of A1-A5, wherein the computer-executable instructions are executable by the processor system further to at least: select the output token from a plurality of tokens that are comprised in a vocabulary of the AI model as a result of the output token corresponding to the combination of the norm of the intermediate layer output multi-bit elements, the norm of the second multi-bit components, and the representation of the second layer output multi-bit elements to an extent that is greater than extents to which other tokens that are comprised in the plurality of tokens correspond to the combination of the norm of the intermediate layer output multi-bit elements, the norm of the second multi-bit components, and the representation of the second layer output multi-bit elements.

(A7) In the example system of any of A1-A6, wherein the first multi-bit components of the first vector represent first floating point numbers that are less than one; wherein the second multi-bit components of the second vector represent second floating point numbers that are less than one; and wherein the input multi-bit components of the input vector represent input floating point numbers that are less than one.

(A8) In the example system of any of A1-A7, wherein the random probability distribution is a Gaussian distribution.

(A9) In the example system of any of A1-A8, wherein the random probability distribution is a Rademacher distribution.

(A10) In the example system of any of A1-A9, wherein the random probability distribution is a Bernoulli distribution.

(A11) In the example system of any of A1-A10, wherein the first multi-bit components of the first vector, the second multi-bit components of the second vector, and the input multi-bit components of the input vector are 32-bit components.

(A12) In the example system of any of A1-A11, wherein the first multi-bit components of the first vector, the second multi-bit components of the second vector, and the input multi-bit components of the input vector are 64-bit components.

(B1) A second example system (Figure 1, 102A-102M, 106A-106N; Figure 5, 500; Figure 6, 602; Figure 7, 700) comprises a processor system (Figure 6, 610; Figure 7, 702) and a memory (Figure 6, 620, 622, 624; Figure 7, 704, 708, 710) that stores computer-executable instructions. The computer-executable instructions are executable by the processor system to at least generate (Figure 4, 402) sets of first layer output multi-bit elements (Figure 5, 552) using a first layer (Figure 5, 516) of an artificial intelligence (AI) model (Figure 5, 508) by combining sets of input single-bit components (Figure 5, 562), which represent input tokens (Figure 5, 530) in an AI prompt (Figure 5, 528), and sets of first single-bit components (Figure 5, 564), which represent first vectors (Figure 5, 532) in a first matrix that defines the first layer of the AI model, using an exclusive-or operation. The computer-executable instructions are executable by the processor system further to at least transform (Figure 4, 404) the sets of the first layer output multi-bit elements into sets of first layer output single-bit elements (Figure 5, 554) by combining the sets of the first layer output multi-bit elements and first values (Figure 5, 536) selected from a random probability distribution. The computer-executable instructions are executable by the processor system further to at least generate (Figure 4, 406) sets of second layer output multi-bit elements (Figure 5, 556) using a second layer (Figure 5, 520) of the AI model by combining sets of intermediate layer output single-bit elements (Figure 5, 538), which correspond to sets of intermediate layer output multi-bit elements (Figure 5, 546) that are derived from the sets of the first layer output single-bit elements, and sets of second single-bit components (Figure 5, 566), which represent sets of second multi-bit components (Figure 5, 542) of second vectors (Figure 5, 540) in a second matrix that defines the second layer of the AI model, using the exclusive-or operation. The computer-executable instructions are executable by the processor system further to at least generate (Figure 4, 408) a response (Figure 5, 568) to the AI prompt. The response comprises output tokens (Figure 5, 570) that correspond to combinations of norms of the sets of the intermediate layer output multi-bit elements, norms of the sets of the second multi-bit components, and representations of the sets of the second layer output multi-bit elements.

(B2) In the example system of B1, wherein the output tokens correspond to combinations of the norms of the sets of the intermediate layer output multi-bit elements, the norms of the sets of the second multi-bit components, the representations of the sets of the second layer output multi-bit elements, and error estimates; and wherein the error estimates represent errors introduced by the sets of the input single-bit components estimating sets of input multi-bit components of input vectors that represent the input tokens, the sets of the first single-bit components estimating sets of first multi-bit components that are comprised in the first vectors, and the sets of the second single-bit components estimating sets of second multi-bit components that are comprised in the second vectors.

(B3) In the example system of any of B1-B2, wherein the computer-executable instructions are executable by the processor system further to at least: transform the sets of the second layer output multi-bit elements into sets of second layer output single-bit elements by combining the sets of the second layer output multi-bit elements and second values selected from the random probability distribution; and generate the output tokens by multiplying the norms of the sets of the intermediate layer output multi-bit elements, the norms of the sets of the second multi-bit components, and cosines of angles, which take into consideration the error estimates and population counts of the sets of the second layer output single-bit elements.

(B4) In the example system of any of B1-B3, wherein the computer-executable instructions are executable by the processor system further to at least: transform the sets of the second layer output multi-bit elements into sets of second layer output single-bit elements by combining the sets of the second layer output multi-bit elements and second values selected from the random probability distribution; and generate the output tokens by multiplying the norms of the sets of the intermediate layer output multi-bit elements, the norms of the sets of the second multi-bit components, and cosines of angles, which take into consideration the error estimates and sums of the sets of the second layer output single-bit elements.

(B5) In the example system of any of B1-B4, wherein the computer-executable instructions are executable by the processor system further to at least: select the output tokens from a plurality of tokens that are comprised in a vocabulary of the AI model as a result of the output tokens corresponding to the norms of the sets of the intermediate layer output multi-bit elements, the norms of the sets of the second multi-bit components, and the representations of the combinations of the sets of the second layer output multi-bit elements to extents that are greater than extents to which other tokens that are comprised in the plurality of tokens correspond to the combinations of the norms of the sets of the intermediate layer output multi-bit elements, the norms of the sets of the second multi-bit components, and the representations of the sets of the second layer output multi-bit elements.

(B6) In the example system of any of B1-B5, wherein the random probability distribution is a Gaussian distribution.

(B7) In the example system of any of B1-B6, wherein the random probability distribution is a Rademacher distribution.

(B8) In the example system of any of B1-B7, wherein the random probability distribution is a Bernoulli distribution.

(C1) A first example method is implemented by a computing system (Figure 1, 102A-102M, 106A-106N; Figure 3, 300; Figure 6, 602; Figure 7, 700). The method comprises generating (Figure 2, 208) first layer output multi-bit elements (Figure 2, 208) using a first layer (Figure 3, 316) of an artificial intelligence (AI) model (Figure 3, 308) by combining input single-bit components (Figure 3, 362), which represent an input token (Figure 3, 330) in an AI prompt (Figure 3, 328), and first single-bit components (Figure 3, 364), which represent the first layer of the AI model, using an exclusive-or operation. The method further comprises transforming (Figure 2, 210) the first layer output multi-bit elements into first layer output single-bit elements (Figure 3, 354) by combining the first layer output multi-bit elements and first values (Figure 3, 336) selected from a random probability distribution. The method further comprises generating (Figure 2, 212) second layer output multi-bit elements (Figure 3, 356) using a second layer (Figure 3, 320) of the AI model by combining intermediate layer output single-bit elements (Figure 3, 338), which correspond to intermediate layer output multi-bit elements (Figure 3, 346) that are derived from the first layer output single-bit elements, and second single-bit components (Figure 3, 366), which represent the second layer of the AI model, using the exclusive-or operation. The method further comprises generating (Figure 2, 214) a response (Figure 3, 368) to the AI prompt. The response comprises an output token (Figure 3, 370) that corresponds to a combination of a norm of the intermediate layer output multi-bit elements, a norm of second multi-bit components (Figure 3, 342) from which the second single-bit components are derived, and a representation of the second layer output multi-bit elements.

(C2) In the example method of C1, wherein generating the first layer output multi-bit elements by combining the input single-bit components and the first single-bit components using the exclusive-or operation and generating the second layer output multi-bit elements by combining the intermediate layer output single-bit elements and the second single-bit components using the exclusive-or operation increase efficiency of the AI model.

(C3) In the example method of any of C1-C2, wherein the output token corresponds to a combination of the norm of the intermediate layer output multi-bit elements, the norm of the second multi-bit components, the representation of the second layer output multi-bit elements, and an error estimate; and wherein the error estimate represents an error introduced by the input single-bit components estimating input multi-bit components of an input vector that represents the input token, the first single-bit components estimating first multi-bit components of a first vector that represents the first layer of the AI model, and the second single-bit components estimating second multi-bit components of a second vector that represents the second layer of the AI model.

(C4) In the example method of any of C1-C3, further comprising: transforming the second layer output multi-bit elements into second layer output single-bit elements by combining the second layer output multi-bit elements and second values selected from the random probability distribution; wherein generating the response to the AI prompt comprises: generating the output token by multiplying the norm of the intermediate layer output multi-bit elements, the norm of the second multi-bit components, and a cosine of an angle, which takes into consideration the error estimate and a population count of the second layer output single-bit elements.

(C5) In the example method of any of C1-C4, further comprising: transforming the second layer output multi-bit elements into second layer output single-bit elements by combining the second layer output multi-bit elements and second values selected from the random probability distribution; wherein generating the response to the AI prompt comprises: generating the output token by multiplying the norm of the intermediate layer output multi-bit elements, the norm of the second multi-bit components, and a cosine of an angle, which takes into consideration the error estimate and a sum of the second layer output single-bit elements.

(C6) In the example method of any of C1-C5, wherein generating the response to the AI prompt comprises: selecting the output token from a plurality of tokens that are comprised in a vocabulary of the AI model as a result of the output token corresponding to the combination of the norm of the intermediate layer output multi-bit elements, the norm of the second multi-bit components, and the representation of the second layer output multi-bit elements to an extent that is greater than extents to which other tokens that are comprised in the plurality of tokens correspond to the combination of the norm of the intermediate layer output multi-bit elements, the norm of the second multi-bit components, and the representation of the second layer output multi-bit elements.

(C7) In the example method of any of C1-C6, wherein the random probability distribution is a Gaussian distribution.

(C8) In the example method of any of C1-C7, wherein the random probability distribution is a Rademacher distribution.

(C9) In the example method of any of C1-C8, wherein the random probability distribution is a Bernoulli distribution.

(D1) A second example method is implemented by a computing system (Figure 1, 102A-102M, 106A-106N; Figure 5, 500; Figure 6, 602; Figure 7, 700). The method comprises generating (Figure 4, 402) sets of first layer output multi-bit elements (Figure 5, 552) using a first layer (Figure 5, 516) of an artificial intelligence (AI) model (Figure 5, 508) by combining sets of input single-bit components (Figure 5, 562), which represent input tokens (Figure 5, 530) in an AI prompt (Figure 5, 528), and sets of first single-bit components (Figure 5, 564), which represent first vectors (Figure 5, 532) in a first matrix that defines the first layer of the AI model, using an exclusive-or operation. The method further comprises transforming (Figure 4, 404) the sets of the first layer output multi-bit elements into sets of first layer output single-bit elements (Figure 5, 554) by combining the sets of the first layer output multi-bit elements and first values (Figure 5, 536) selected from a random probability distribution. The method further comprises generating (Figure 4, 406) sets of second layer output multi-bit elements (Figure 5, 556) using a second layer (Figure 5, 520) of the AI model by combining sets of intermediate layer output single-bit elements (Figure 5, 538), which correspond to sets of intermediate layer output multi-bit elements (Figure 5, 546) that are derived from the sets of the first layer output single-bit elements, and sets of second single-bit components (Figure 5, 566), which represent sets of second multi-bit components (Figure 5, 542) of second vectors (Figure 5, 540) in a second matrix that defines the second layer of the AI model, using the exclusive-or operation. The method further comprises generating (Figure 4, 408) a response (Figure 5, 568) to the AI prompt. The response comprises output tokens (Figure 5, 570) that correspond to combinations of norms of the sets of the intermediate layer output multi-bit elements, norms of the sets of the second multi-bit components, and representations of the sets of the second layer output multi-bit elements

(D2) In the example method of D1, wherein generating the sets of the first layer output multi-bit elements by combining the sets of the input single-bit components and the sets of the first single-bit components using the exclusive-or operation and generating the sets of the second layer output multi-bit elements by combining the sets of the intermediate layer output single-bit elements and the sets of the second single-bit components using the exclusive-or operation increase efficiency of the AI model.

(D3) In the example method of any of D1-D2, wherein the output tokens correspond to combinations of the norms of the sets of the intermediate layer output multi-bit elements, the norms of the sets of the second multi-bit components, the representations of the sets of the second layer output multi-bit elements, and error estimates; and wherein the error estimates represent errors introduced by the sets of the input single-bit components estimating sets of input multi-bit components of input vectors that represent the input tokens, the sets of the first single-bit components estimating sets of first multi-bit components that are comprised in the first vectors, and the sets of the second single-bit components estimating sets of second multi-bit components that are comprised in the second vectors.

(D4) In the example method of any of D1-D3, further comprising: transforming the sets of the second layer output multi-bit elements into sets of second layer output single-bit elements by combining the sets of the second layer output multi-bit elements and second values selected from the random probability distribution; wherein generating the response to the AI prompt comprises: generating the output tokens by multiplying the norms of the sets of the intermediate layer output multi-bit elements, the norms of the sets of the second multi-bit components, and cosines of angles, which take into consideration the error estimates and population counts of the sets of the second layer output single-bit elements.

(D5) In the example method of any of D1-D4, further comprising: transforming the sets of the second layer output multi-bit elements into sets of second layer output single-bit elements by combining the sets of the second layer output multi-bit elements and second values selected from the random probability distribution; wherein generating the response to the AI prompt comprises: generating the output tokens by multiplying the norms of the sets of the intermediate layer output multi-bit elements, the norms of the sets of the second multi-bit components, and cosines of angles, which take into consideration the error estimates and sums of the sets of the second layer output single-bit elements.

(D6) In the example method of any of D1-D5, wherein generating the response to the AI prompt comprises: selecting the output tokens from a plurality of tokens that are comprised in a vocabulary of the AI model as a result of the output tokens corresponding to the norms of the sets of the intermediate layer output multi-bit elements, the norms of the sets of the second multi-bit components, and the representations of the combinations of the sets of the second layer output multi-bit elements to extents that are greater than extents to which other tokens that are comprised in the plurality of tokens correspond to the combinations of the norms of the sets of the intermediate layer output multi-bit elements, the norms of the sets of the second multi-bit components, and the representations of the sets of the second layer output multi-bit elements.

(D7) In the example method of any of D1-D6, wherein the random probability distribution is a Gaussian distribution.

(D8) In the example method of any of D1-D7, wherein the random probability distribution is a Rademacher distribution.

(D9) In the example method of any of D1-D8, wherein the random probability distribution is a Bernoulli distribution.

(E1) A first example computer program product (Figure 6, 624; Figure 7, 718, 722) comprises a computer-readable storage medium having instructions recorded thereon for enabling a processor-based system (Figure 1, 102A-102M, 106A-106N; Figure 3, 300; Figure 6, 602; Figure 7, 700) to perform operations. The operations comprise generating (Figure 2, 208) first layer output multi-bit elements (Figure 2, 208) using a first layer (Figure 3, 316) of an artificial intelligence (AI) model (Figure 3, 308) by combining input single-bit components (Figure 3, 362), which represent an input token (Figure 3, 330) in an AI prompt (Figure 3, 328), and first single-bit components (Figure 3, 364), which represent the first layer of the AI model, using an exclusive-or operation. The operations further comprise transforming (Figure 2, 210) the first layer output multi-bit elements into first layer output single-bit elements (Figure 3, 354) by combining the first layer output multi-bit elements and first values (Figure 3, 336) selected from a random probability distribution. The operations further comprise generating (Figure 2, 212) second layer output multi-bit elements (Figure 3, 356) using a second layer (Figure 3, 320) of the AI model by combining intermediate layer output single-bit elements (Figure 3, 338), which correspond to intermediate layer output multi-bit elements (Figure 3, 346) that are derived from the first layer output single-bit elements, and second single-bit components (Figure 3, 366), which represent the second layer of the AI model, using the exclusive-or operation. The operations further comprise generating (Figure 2, 214) a response (Figure 3, 368) to the AI prompt. The response comprises an output token (Figure 3, 370) that corresponds to a combination of a norm of the intermediate layer output multi-bit elements, a norm of second multi-bit components (Figure 3, 342) from which the second single-bit components are derived, and a representation of the second layer output multi-bit elements.

(F1) A second example computer program product (Figure 6, 624; Figure 7, 718, 722) comprises a computer-readable storage medium having instructions recorded thereon for enabling a processor-based system (Figure 1, 102A-102M, 106A-106N; Figure 5, 500; Figure 6, 602; Figure 7, 700) to perform operations. The operations comprise generating (Figure 4, 402) sets of first layer output multi-bit elements (Figure 5, 552) using a first layer (Figure 5, 516) of an artificial intelligence (AI) model (Figure 5, 508) by combining sets of input single-bit components (Figure 5, 562), which represent input tokens (Figure 5, 530) in an AI prompt (Figure 5, 528), and sets of first single-bit components (Figure 5, 564), which represent first vectors (Figure 5, 532) in a first matrix that defines the first layer of the AI model, using an exclusive-or operation. The operations further comprise transforming (Figure 4, 404) the sets of the first layer output multi-bit elements into sets of first layer output single-bit elements (Figure 5, 554) by combining the sets of the first layer output multi-bit elements and first values (Figure 5, 536) selected from a random probability distribution. The operations further comprise generating (Figure 4, 406) sets of second layer output multi-bit elements (Figure 5, 556) using a second layer (Figure 5, 520) of the AI model by combining sets of intermediate layer output single-bit elements (Figure 5, 538), which correspond to sets of intermediate layer output multi-bit elements (Figure 5, 546) that are derived from the sets of the first layer output single-bit elements, and sets of second single-bit components (Figure 5, 566), which represent sets of second multi-bit components (Figure 5, 542) of second vectors (Figure 5, 540) in a second matrix that defines the second layer of the AI model, using the exclusive-or operation. The operations further comprise generating (Figure 4, 408) a response (Figure 5, 568) to the AI prompt. The response comprises output tokens (Figure 5, 570) that correspond to combinations of norms of the sets of the intermediate layer output multi-bit elements, norms of the sets of the second multi-bit components, and representations of the sets of the second layer output multi-bit elements

Techniques are described herein that are capable of compressing and transforming vector operations in an AI model. In an example, first output multi-bit elements (MBEs) are generated by combining input single-bit components (SBCs) representing an input token in an AI prompt and first SBCs representing a first layer of the AI model using an exclusive-or operation. The first output MBEs are transformed into first output single-bit elements (SBEs) using a random probability distribution. Second output MBEs are generated by combining intermediate SBEs corresponding to intermediate MBEs derived from the first output SBEs and second SBCs representing a second layer of the AI model using the exclusive-or operation. A response to the AI prompt is generated to include an output token corresponding to a combination of a norm of the intermediate MBEs, a norm of second multi-bit components from which the second SBCs are derived, and a representation of the second output MBEs.

III. Example Computer System

FIG. 6 depicts an example computer 600 in which embodiments may be implemented. Any one or more of the user devices 102A-102M and/or any one or more of the servers 106A-106N shown in FIG. 1, the computing system 300 shown in FIG. 3, and/or the computing system 500 shown in FIG. 5 may be implemented using computer 600, including one or more features of computer 600 and/or alternative features. Computer 600 may be a general-purpose computing device in the form of a conventional personal computer, a mobile computer, or a workstation, for example, or computer 600 may be a special purpose computing device. The description of computer 600 provided herein is provided for purposes of illustration, and is not intended to be limiting. Embodiments may be implemented in further types of computer systems, as would be known to persons skilled in the relevant art(s).

As shown in FIG. 6, computer 600 includes a processor system 602, a system memory 604, and a bus 606 that couples various system components including system memory 604 to processor system 602. Bus 606 represents one or more of any of several types of bus structures, including a memory bus or memory controller, a peripheral bus, an accelerated graphics port, and a processor or local bus using any of a variety of bus architectures. System memory 604 includes read only memory (ROM) 608 and random access memory (RAM) 610. A basic input/output system 612 (BIOS) is stored in ROM 608.

Computer 600 also has one or more of the following drives: a hard disk drive 614 for reading from and writing to a hard disk, a magnetic disk drive 616 for reading from or writing to a removable magnetic disk 618, and an optical disk drive 620 for reading from or writing to a removable optical disk 622 such as a CD ROM, DVD ROM, or other optical media. Hard disk drive 614, magnetic disk drive 616, and optical disk drive 620 are connected to bus 606 by a hard disk drive interface 624, a magnetic disk drive interface 626, and an optical drive interface 628, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 630, one or more application programs 632, other program modules 634, and program data 636. Application programs 632 or program modules 634 may include, for example, computer program logic for implementing any one or more of (e.g., at least a portion of) the vector compressing and transforming AI model 108, the vector compressing and transforming AI model 308, the vector generation logic 312, the vector conversion logic 314, the first AI layer 316, the first transformation logic 318, the second AI layer 320, the second transformation logic 322, the response generation logic 324, the error estimation logic 326, the vector compressing and transforming AI model 508, the vector generation logic 512, the vector conversion logic 514, the first AI layer 516, the first transformation logic 518, the second AI layer 520, the second transformation logic 522, the response generation logic 524, the error estimation logic 526, flowchart 200 (including any step of flowchart 200), and/or flowchart 400 (including any step of flowchart 400), as described herein.

A user may enter commands and information into the computer 600 through input devices such as keyboard 638 and pointing device 640. Other input devices (not shown) may include a microphone, joystick, game pad, satellite dish, scanner, touch screen, camera, accelerometer, gyroscope, or the like. These and other input devices are often connected to the processor system 602 through a serial port interface 642 that is coupled to bus 606, but may be connected by other interfaces, such as a parallel port, game port, or a universal serial bus (USB).

A display device 644 (e.g., a monitor) is also connected to bus 606 via an interface, such as a video adapter 646. In addition to display device 644, computer 600 may include other peripheral output devices (not shown) such as speakers and printers.

Computer 600 is connected to a network 648 (e.g., the Internet) through a network interface or adapter 650, a modem 652, or other means for establishing communications over the network. Modem 652, which may be internal or external, is connected to bus 606 via serial port interface 642.

As used herein, the terms "computer program medium" and "computer-readable storage medium" are used to generally refer to media (e.g., non-transitory media) such as the hard disk associated with hard disk drive 614, removable magnetic disk 618, removable optical disk 622, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 632 and other program modules 634) may be stored on the hard disk, magnetic disk, optical disk, ROM, or RAM. Such computer programs may also be received via network interface 650 or serial port interface 642. Such computer programs, when executed or loaded by an application, enable computer 600 to implement features of embodiments discussed herein. Accordingly, such computer programs represent controllers of the computer 600.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

**Claims**

1. A system comprising:

   a processor system (610, 702); and
   a memory (620, 622, 624, 704, 708, 710) that stores computer-executable instructions that are executable by the processor system (610, 702) to at least:

      convert first multi-bit components (334) of a first vector (332) into first single-bit components (364), the first vector (332) representing a first layer (316) in an artificial intelligence 'AI' model (308);
      convert second multi-bit components (342) of a second vector (340) into second single-bit components (366), the second vector (340) representing a second layer (320) in the AI model (308);
      convert input multi-bit components (350) of an input vector (348) into input single-bit components (362), the input vector (348) representing an input token (330) in an AI prompt (328);
      generate first layer output multi-bit elements (352) by combining the input single-bit components (362) and the first single-bit components (364) using an exclusive-or operation;
      transform the first layer output multi-bit elements (352) into first layer output single-bit elements (354) by combining the first layer output multi-bit elements (352) and a random bit sequence (336) that is generated using a random probability distribution;
      generate second layer output multi-bit elements (356) by combining intermediate layer output single-bit elements (338), which correspond to intermediate layer output multi-bit elements (346) that are derived from the first layer output single-bit elements (354), and the second single-bit components (366) using the exclusive-or operation; and
      generate a response (368) to the AI prompt (328), the response (368) comprising an output token (370) that corresponds to a combination of a norm of the intermediate layer output multi-bit elements (346), a norm of the second multi-bit components (342), and a representation of the second layer output multi-bit elements (356).

2. The system according to claim 1, wherein the computer-executable instructions are executable by the processor system to at least:
   increase efficiency of the AI model by combining the input single-bit components and the first single-bit components using the exclusive-or operation to generate the first layer output multi-bit elements and combining the intermediate layer output single-bit elements and the second single-bit components using the exclusive-or operation to generate the second layer output multi-bit elements.

3. The system according to any one of claims 1 to 2, wherein the output token corresponds to a combination of the norm of the intermediate layer output multi-bit elements, the norm of the second multi-bit components, the representation of the second layer output multi-bit elements, and an error estimate; and

wherein the error estimate represents an error introduced by converting the first multi-bit components of the first vector into the first single-bit components, converting the second multi-bit components of the second vector into the second single-bit components, and converting the input multi-bit components of the input vector into the input single-bit components.

4. The system according to any one of claims 1 to 3, wherein the computer-executable instructions are executable by the processor system further to at least:

   transform the second layer output multi-bit elements into second layer output single-bit elements by combining the second layer output multi-bit elements and a second random bit sequence that is generated using the random probability distribution; and
   generate the output token by multiplying the norm of the intermediate layer output multi-bit elements, the norm of the second multi-bit components, and a cosine of an angle, which takes into consideration the error estimate and a population count of the second layer output single-bit elements.

5. The system according to any one of claims 1 to 4, wherein the computer-executable instructions are executable by the processor system further to at least:

   transform the second layer output multi-bit elements into second layer output single-bit elements by combining the second layer output multi-bit elements and a second random bit sequence that is generated using the random probability distribution; and
   generate the output token by multiplying the norm of the intermediate layer output multi-bit elements, the norm of the second multi-bit components, and a cosine of an angle, which takes into consideration the error estimate and a sum of the second layer output single-bit elements.

6. The system according to any one of claims 1 to 5, wherein the computer-executable instructions are executable by the processor system further to at least:
   select the output token from a plurality of tokens that are comprised in a vocabulary of the AI model as a result of the output token corresponding to the combination of the norm of the intermediate layer output multi-bit elements, the norm of the second multi-bit components, and the representation of the second layer output multi-bit elements to an extent that is greater than extents to which other tokens that are comprised in the plurality of tokens correspond to the combination of the norm of the intermediate layer output multi-bit elements, the norm of the second multi-bit components, and the representation of the second layer output multi-bit elements.

7. The system according to any one of claims 1 to 6, wherein the first multi-bit components of the first vector represent first floating point numbers that are less than one;

   wherein the second multi-bit components of the second vector represent second floating point numbers that are less than one; and
   wherein the input multi-bit components of the input vector represent input floating point numbers that are less than one.

8. The system according to any one of claims 1 to 7, wherein the random probability distribution is a Gaussian distribution, a Rademacher distribution, or a Bernoulli distribution.

9. The system according to any one of claims 1 to 8, wherein the first multi-bit components of the first vector, the second multi-bit components of the second vector, and the input multi-bit components of the input vector are 32-bit components or 64-bit components.

10. A method implemented by a computing system, the method comprising:

   generating (208) first layer output multi-bit elements using a first layer of an artificial intelligence 'AI' model by combining input single-bit components, which represent an input token in an AI prompt, and first single-bit components, which represent the first layer of the AI model, using an exclusive-or operation;

transforming (210) the first layer output multi-bit elements into first layer output single-bit elements by combining the first layer output multi-bit elements and first values selected from a random probability distribution;

generating (212) second layer output multi-bit elements using a second layer of the AI model by combining intermediate layer output single-bit elements, which correspond to intermediate layer output multi-bit elements that are derived from the first layer output single-bit elements, and second single-bit components, which represent the second layer of the AI model, using the exclusive-or operation; and

generating (214) a response to the AI prompt, the response comprising an output token that corresponds to a combination of a norm of the intermediate layer output multi-bit elements, a norm of second multi-bit components from which the second single-bit components are derived, and a representation of the second layer output multi-bit elements.

11. The method according to claim 10, wherein generating the first layer output multi-bit elements by combining the input single-bit components and the first single-bit components using the exclusive-or operation and generating the second layer output multi-bit elements by combining the intermediate layer output single-bit elements and the second single-bit components using the exclusive-or operation increase efficiency of the AI model.

12. The method according to any one of claims 10 to 11, wherein the output token corresponds to a combination of the norm of the intermediate layer output multi-bit elements, the norm of the second multi-bit components, the representation of the second layer output multi-bit elements, and an error estimate; and

wherein the error estimate represents an error introduced by the input single-bit components estimating input multi-bit components of an input vector that represents the input token, the first single-bit components estimating first multi-bit components of a first vector that represents the first layer of the AI model, and the second single-bit components estimating second multi-bit components of a second vector that represents the second layer of the AI model.

13. The method according to any one of claims 10 to 12, further comprising:

transforming the second layer output multi-bit elements into second layer output single-bit elements by combining the second layer output multi-bit elements and second values selected from the random probability distribution;

wherein generating the response to the AI prompt comprises:

generating the output token by multiplying the norm of the intermediate layer output multi-bit elements, the norm of the second multi-bit components, and a cosine of an angle, which takes into consideration the error estimate and a population count of the second layer output single-bit elements; or

generating the output token by multiplying the norm of the intermediate layer output multi-bit elements, the norm of the second multi-bit components, and a cosine of an angle, which takes into consideration the error estimate and a sum of the second layer output single-bit elements.

14. The method according to any one of claims 10 to 13, wherein generating the response to the AI prompt comprises: selecting the output token from a plurality of tokens that are comprised in a vocabulary of the AI model as a result of the output token corresponding to the combination of the norm of the intermediate layer output multi-bit elements, the norm of the second multi-bit components, and the representation of the second layer output multi-bit elements to an extent that is greater than extents to which other tokens that are comprised in the plurality of tokens correspond to the combination of the norm of the intermediate layer output multi-bit elements, the norm of the second multi-bit components, and the representation of the second layer output multi-bit elements.

15. A computer program product (624, 718, 722) comprising a computer-readable storage medium having instructions recorded thereon for enabling a processor-based system to perform operations, the operations comprising:

generating (402) sets of first layer output multi-bit elements using a first layer of an artificial intelligence 'AI' model by combining sets of input single-bit components, which represent input tokens in an AI prompt, and sets of first single-bit components, which represent first vectors in a first matrix that defines the first layer of the AI model, using an exclusive-or operation;

transforming (404) the sets of the first layer output multi-bit elements into sets of first layer output single-bit elements by combining the sets of the first layer output multi-bit elements and first values selected from a random probability distribution;

generating (406) sets of second layer output multi-bit elements using a second layer of the AI model by combining sets of intermediate layer output single-bit elements, which correspond to sets of intermediate layer output multi-bit elements that are derived from the sets of the first layer output single-bit elements, and sets of second single-bit components, which represent sets of second multi-bit components of second vectors in a second matrix that defines the second layer of the AI model, using the exclusive-or operation; and

generating (408) a response to the AI prompt, the response comprises output tokens that correspond to combinations of norms of the sets of the intermediate layer output multi-bit elements, norms of the sets of the second multi-bit components, and representations of the sets of the second layer output multi-bit elements.

100

102A

First User Device

102B

Second User Device

• • •

102M

Mth User Device

104

Network

106A

First Server(s)

108

Vector Compressing
and Transforming
AI Model

106B

Second Server(s)

• • •

106N

Nth Server(s)

FIG. 1

FIG. 2

300

**Computing System** 308

**Vector Compressing and Transforming AI Model**

AI Prompt 328
Input Token

330

312
Vector Generation Logic

348
350
Input Vector
Input Multi-Bit Components

314
Vector Conversion Logic

362
Input Single-Bit Components

First Vector 332
First Multi-Bit Components

334

316
First AI Layer

First Single-Bit Components
364

352
First Layer Output Multi-Bit Elements

Random Bit Sequence 336

318
First Transformation Logic

354
First Layer Output Single-Bit Elements

Intermed. Layer Output Single-Bit Elements 338

320
Second AI Layer

366
Second Single-Bit Components

Second Vector 340
Second Multi-Bit Components

342

356
Second Layer Output Multi-Bit Elements

Second Random Bit Sequence 344

322
Second Transformation Logic

358
Second Layer Output Single-Bit Elements

Intermed. Layer Output Multi-Bit Elements 346

324
Response Generation Logic

AI Response 368
Output Token

370

360
Error Estimate

326
Error Estimation Logic

**FIG. 3**

4 of 7

400

Compressing and transforming vector operations
in an AI model

402

Generate sets of first layer output multi-bit elements using a
first layer of an AI model by combining sets of input single-bit
components, which represent input tokens in an AI prompt,
and sets of first single-bit components, which represent first
vectors in a first matrix that defines the first layer of the AI
model, using an exclusive-or operation

404

Transform the sets of the first layer output multi-bit elements
into sets of first layer output single-bit elements by combining
the sets of the first layer output multi-bit elements and first
values selected from a random probability distribution

406

Generate sets of second layer output multi-bit elements using
a second layer of the AI model by combining sets of
intermediate layer output single-bit elements, which
correspond to sets of intermediate layer output multi-bit
elements that are derived from the sets of the first layer
output single-bit elements, and sets of second single-bit
components, which represent sets of second multi-bit
components of second vectors in a second matrix that defines
the second layer of the AI model, using the exclusive-or
operation

408

Generate a response to the AI prompt, the response including
output tokens that correspond to combinations of norms of
the sets of the intermediate layer output multi-bit elements,
norms of the sets of the second multi-bit components, and
representations of the sets of the second layer output multi-
bit elements

End

# FIG. 4

500

Computing System
508

Vector Compressing and
Transforming AI Model

528
AI Prompt
Input Tokens
530

512
Vector Generation Logic

548
Input Vectors
Input Multi-Bit
Component Sets
550

514
Vector Conversion Logic

562
Input Single-Bit
Component Sets

532
First Vectors
First Multi-Bit
Component Sets
534

516
First AI Layer

564
First Single-Bit
Component Sets

552
First Layer Output
Multi-Bit Element Sets

536
First Random Values

518
First Transformation
Logic

554
First Layer Output
Single-Bit Element Sets

538
Intermed. Layer Output
Single-Bit Element Sets

520
Second AI Layer

566
Second Single-Bit
Component Sets

540
Second Vectors
Second Multi-Bit
Component Sets
542

556
Second Layer Output
Multi-Bit Element Sets

544
Second Random
Values

522
Second Transformation
Logic

558
Second Layer Output
Single-Bit Element Sets

546
Intermed. Layer Output
Multi-Bit Element Sets

524
Response Generation
Logic

568
AI Response
Output Tokens
570

560
Error Estimates

526
Error Estimation Logic

FIG. 5

600

602

Mobile Device

**Memory 620**

Non-Removable Memory 622

Removable Memory 624

Power Supply 682

GPS Receiver 684

Accelerometer 686

Input/Output Ports 680

Processor System 610

Physical Connector 690

**Input Device(s) 630**

Touch Screen with finger hover detection 632

Microphone 634

Camera 636

Physical Keyboard 638

Trackball 640

**Output Device(s) 650**

Speaker 652

Display 654

Operating System 612

**Wireless Modem(s) 670**

Wi-Fi 672

Bluetooth® 674

Cellular 676

Vector Compressing and Transforming AI Model 692

Applications

Applications

Applications

614

604

## FIG. 6

FIG. 7

Europäisches
Patentamt

European
Patent Office

Office européen
des brevets

# EUROPEAN SEARCH REPORT

**Application Number**

EP 25 17 7390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/019441 A1 (ROSING TAJANA SIMUNIC [US] ET AL) 20 January 2022 (2022-01-20) | 1,2, 4-11, 13-15 | INV.<br>G06F9/30<br>G06F17/16 |
| Y | * paragraphs [0005], [0120], [0125], [0149], [0271], [0324], [0326] * | 3,12 | G06N20/00 |
| | ----- | | |
| X | LEE HYUNSEUNG ET AL: "A Memory-Efficient Edge Inference Accelerator with XOR-Based Model Compression",<br>PROCEEDINGS OF THE 58TH ANNUAL ACM/IEEE DESIGN AUTOMATION CONFERENCE, ACMPUB27, NEW YORK, NY, USA,<br>9 July 2023 (2023-07-09), pages 1-6, XP059911217,<br>DOI: 10.1109/DAC56929.2023.10248005<br>ISBN: 979-8-4007-0468-0 | 1,10,15 | |
| Y | * Section II<br>Section III * | 3,12 | |
| | ----- | | |
| X | Wang Hongyu ET AL: "BitNet: Scaling 1-bit Transformers for Large Language Models",<br>arXiv.org,<br>17 October 2023 (2023-10-17), XP093323988,<br>Retrieved from the Internet:<br>URL:https://arxiv.org/pdf/2310.11453<br>* Section 2<br>Section 4;<br>figure 2 * | 1,10,15 | **TECHNICAL FIELDS SEARCHED (IPC)**<br><br>G06F<br>G06N |
| | ----- | | |
| X | Huang Wei ET AL: "BiLLM: Pushing the Limit of Post-Training Quantization for LLMs",<br>,<br>15 May 2024 (2024-05-15), XP093323999,<br>Retrieved from the Internet:<br>URL:https://arxiv.org/pdf/2402.04291<br>* Section 3;<br>figures 3,4 * | 1,10,15 | |
| | ----- | | |

The present search report has been drawn up for all claims

| Place of search | Date of completion of the search | Examiner |
|---|---|---|
| Munich | 13 October 2025 | Frank, Mario |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**EP 4 657 246 A1**

## ANNEX TO THE EUROPEAN SEARCH REPORT
## ON EUROPEAN PATENT APPLICATION NO.

EP 25 17 7390

13-10-2025

| Patent document cited in search report | Publication date | Patent family member(s) | Publication date |
|---|---|---|---|
| US 2022019441 A1 | 20-01-2022 | US 2022019441 A1 | 20-01-2022 |
| | | US 2022059189 A1 | 24-02-2022 |